# EUROPEAN PATENT APPLICATION

(11) **EP 4 797 429 A2**
(43) Date of publication of application: **26.08.2026**
(21) Application number: 26191833.8
(22) Date of filing: 02.08.2021
(51) Int. Cl.: H01M 50/55

(54) **BATTERY PACKAGE, AND BATTERY MODULE**

(30) Priority: 07.08.2020 JP 2020134896
(62) Document number(s) of the earlier application(s) in accordance with Art. 76 EPC: 21852499.9 / 4 195 373
(71) Applicant: Kyocera Corporation, Kyoto-shi, Kyoto 612-8501 (JP)
(72) Inventor: NAKAMOTO, Koutarou, Kyoto-shi, Kyoto, 612-8501 (JP)
(74) Representative: Viering, Jentschura & Partner mbB Patent- und Rechtsanwälte

(57) **Abstract**

A wiring conductor (130) includes a first electrode (131) located on a bottom surface of a recessed portion 113, a second electrode (132) located on a first surface (111) between a frame portion (120) and the recessed portion (113), a first external electrode (134A) located on a second surface (112), and a second external electrode (134B) located on the second surface (112) and electrically connected to the second electrode (132). A conductive sheet (140) is electrically connected to the second electrode (132) and extends over an opening of the recessed portion (113) above the first surface (111).

## Description

### TECHNICAL FIELD

The present disclosure relates to a battery package and a battery module.

### BACKGROUND OF INVENTION

Various forms of power supplies that can be surface-mounted on a mounting substrate together with electronic circuit components have been proposed as power supplies or auxiliary power supplies for small electronic devices.

For example, Patent Document 1 describes a solid-state battery in which a battery laminate body is accommodated in a sealed case that can be mounted on a substrate. Electrodes of the sealed case and the battery laminate body are connected by wire bonding.

Patent Document 2 describes a chip-type electric double-layer capacitor in which an electric double-layer capacitor is mounted in an accommodation space of an outer case. An upper electrode of the electric double-layer capacitor and an external terminal of the outer case are electrically connected by a conductive sheet. The conductive sheet is connected to the upper electrode of the electric double-layer capacitor. The conductive sheet is bent to pass the side of the electric double-layer capacitor and is connected to a terminal exposed to the accommodation space.

Patent Document 3 describes a solid-state battery in which a battery material is accommodated in an accommodation member including an insulating base material and a lid member. The insulating base material has an accommodation recessed portion for accommodating the battery material, and a negative electrode layer of a battery element body is connected to a negative electrode terminal by way of the lid member.

### CITATION LIST

### PATENT LITERATURE

Patent Document 1: JP 2010-118159 A
Patent Document 2: JP 2011-14864 A
Patent Document 3: WO 2012/141231

### SUMMARY

In one aspect of the present disclosure, a battery package comprises an insulating substrate having a first surface, a second surface on a side opposite to the first surface, and a recessed portion which opens in the first surface and in which a battery is accommodated; a frame portion surrounding the recessed portion on the first surface; a wiring conductor comprising a first electrode located on a bottom surface of the recessed portion, a second electrode located on the first surface between the frame portion and the recessed portion, a first external electrode located on the second surface and electrically connected to the first electrode, and a second external electrode located on the second surface and electrically connected to the second electrode; a conductive sheet electrically connected to the second electrode and extending over an opening of the recessed portion above the first surface; and a lid closing the frame portion.

In one aspect of the present disclosure, a battery module comprises the battery package having the configuration described above; and a battery accommodated in the recessed portion of the battery package and comprising a lower surface electrode electrically connected to the first electrode and an upper surface electrode electrically connected to the conductive sheet.

### BRIEF DESCRIPTION OF THE DRAWINGS

FIG. 1 is a perspective view illustrating an outer appearance of an example of a battery module.
FIG. 2 is an exploded perspective view of the battery module of FIG. 1.
FIG. 3 is a plan view illustrating an example of the battery module of FIG. 1 in a state in which a lid is removed.
FIG. 4 is a plan view illustrating an example of the battery module of FIG. 1 in a state in which the lid and a conductive sheet are removed.
FIG. 5 is a cross-sectional view taken along line V-V in FIG. 3.
FIG. 6 is a cross-sectional view taken along line VI-VI in FIG. 3.
FIG. 7 is a plan view illustrating an example of the battery module of FIG. 1 in a state in which the lid, the conductive sheet, a battery, and the like are removed.
FIG. 8 is a bottom view illustrating an example of the battery module of FIG. 1.
FIG. 9 is a bottom view of the battery module of FIG. 1 illustrating a state in which a seal pattern is formed on a second surface of an insulating substrate.
FIG. 10 is a bottom view of the battery module of FIG. 1 illustrating a state in which the seal pattern is formed on the second surface of the insulating substrate.
FIG. 11 is a partially enlarged cross-sectional view of a battery module using a thin-film type all-solid-state battery as a battery.
FIG. 12 is a partially enlarged cross-sectional view of a battery module using a plurality of thin-film type all-solid-state batteries as batteries.
FIG. 13 is a plan view illustrating another example of a battery module in a state in which a lid is removed.
FIG. 14 is a plan view illustrating another example of the battery module in a state in which the lid and a conductive sheet are removed.
FIG. 15 is a cross-sectional view taken along line XV-XV in FIG. 13.
FIG. 16 is a cross-sectional view taken along line XVI-XVI in FIG. 13.
FIG. 17 is a plan view illustrating another example of a battery module in a state in which a lid is removed.
FIG. 18 is a plan view illustrating another example of the battery module in a state in which the lid and a conductive sheet are removed.
FIG. 19 is a cross-sectional view taken along line XIX-XIX in FIG. 17.
FIG. 20 is a cross-sectional view taken along line XX-XX in FIG. 17.
FIG. 21 is a cross-sectional view illustrating another example of a battery module.
FIG. 22 is a cross-sectional view illustrating another example of a battery module.
FIG. 23 is a plan view illustrating another example of the battery module in a state in which a lid and a conductive sheet are removed.
FIG. 24 is a cross-sectional view taken along line XXIV-XXIV in FIG. 23.
FIG. 25 is a cross-sectional view illustrating another example of a battery module.
FIG. 26 is a cross-sectional view illustrating another example of a battery module.
FIG. 27 is a plan view illustrating another example of a battery module in a state in which a lid and a conductive sheet are removed.
FIG. 28 is a cross-sectional view taken along line XXVIII-XXVIII in FIG. 27.
FIG. 29 is a cross-sectional view taken along line XXIX-XXIX in FIG. 30.
FIG. 30 is a bottom view of another example of a battery module.

### DESCRIPTION OF EMBODIMENTS

A battery package and a battery module according to an embodiment of the present disclosure will be described with reference to the accompanying drawings. In the following description, a lid side or a first surface side of an insulating substrate in the battery package may be referred to as an upper side, and an insulating substrate side or a second surface side of the insulating substrate in the battery package may be referred to as a lower side. The vertical direction may be referred to as a height direction (thickness direction) in the description. This distinction between up (upper) and down (lower) is merely for the sake of convenience, and does not limit up (upper) and down (lower) when the battery module or the like is actually used.

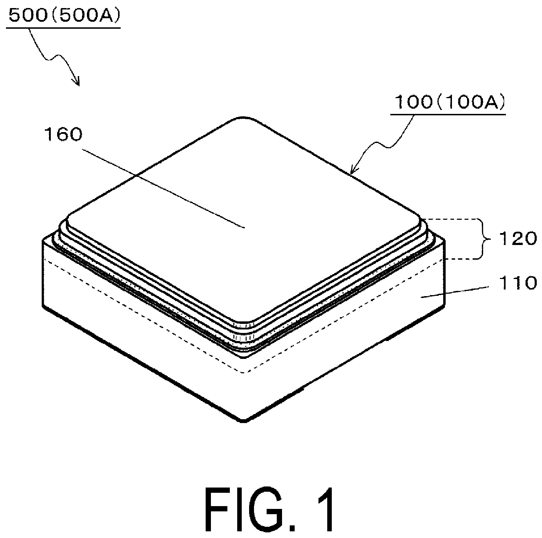

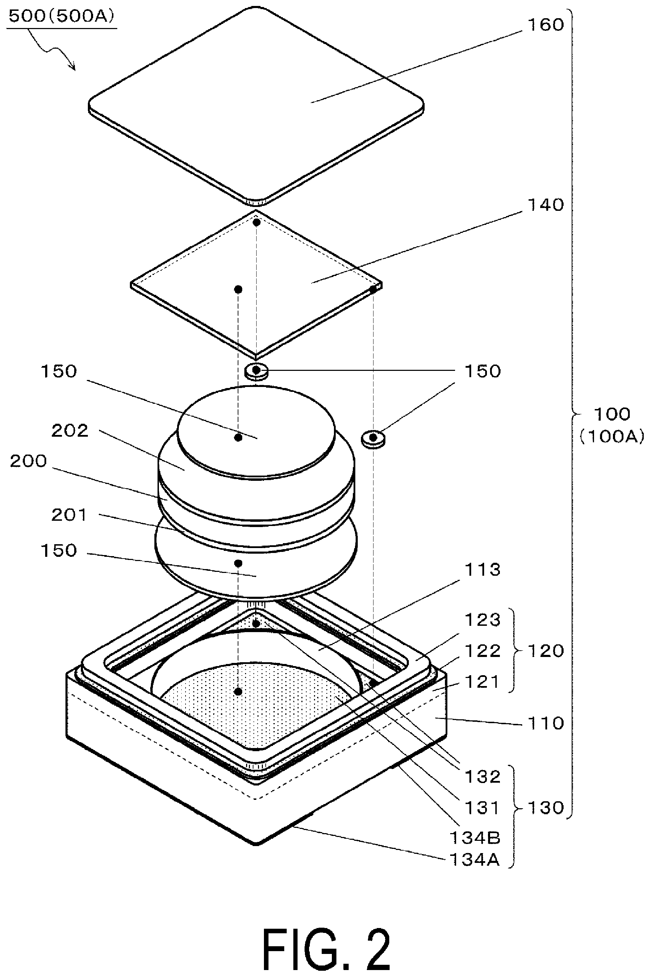

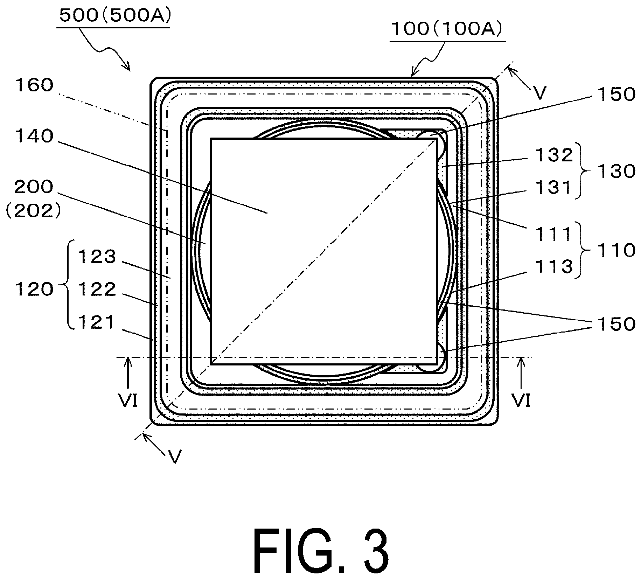

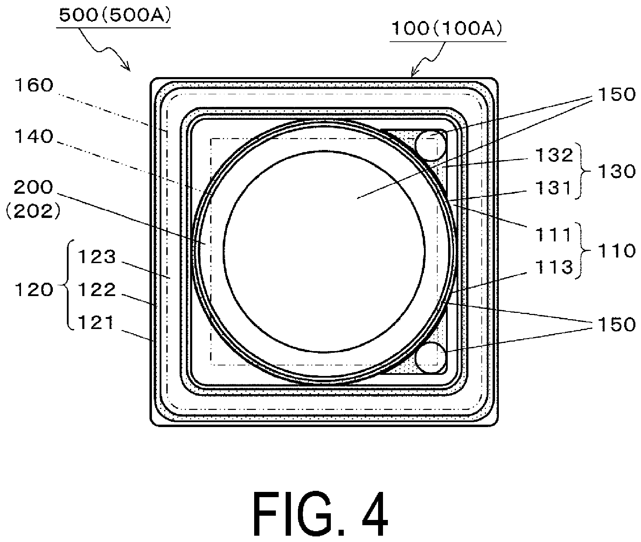

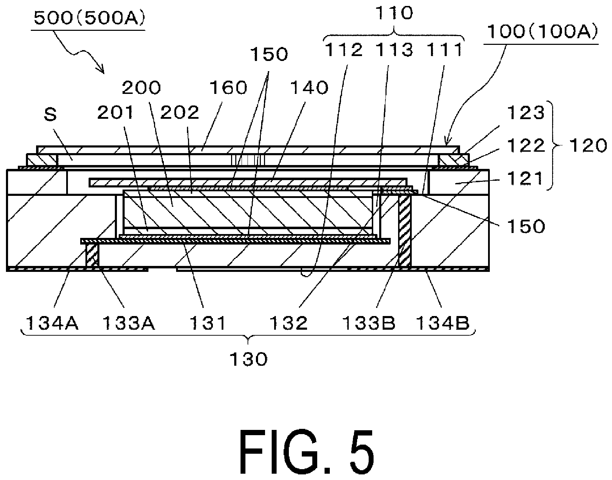

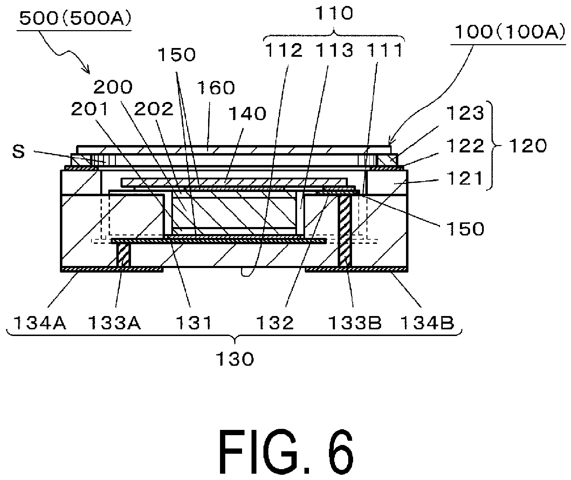

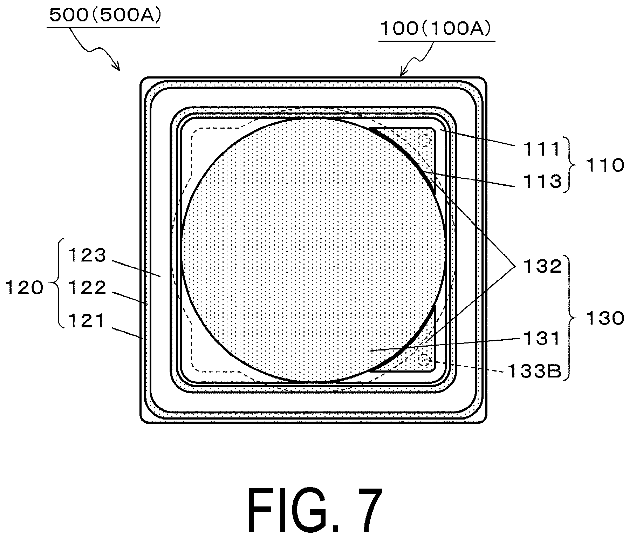

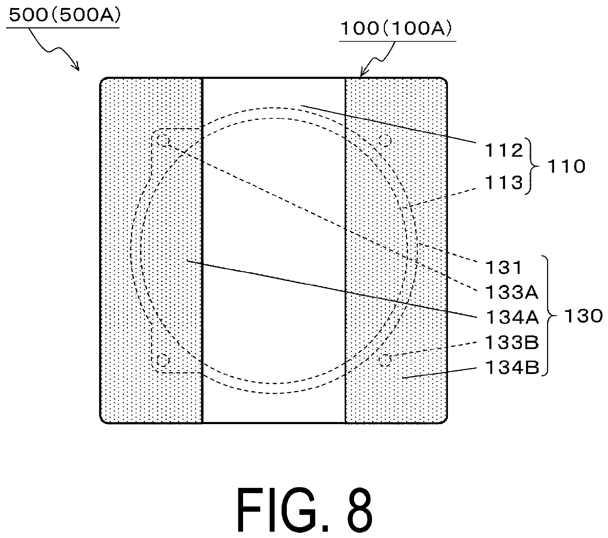

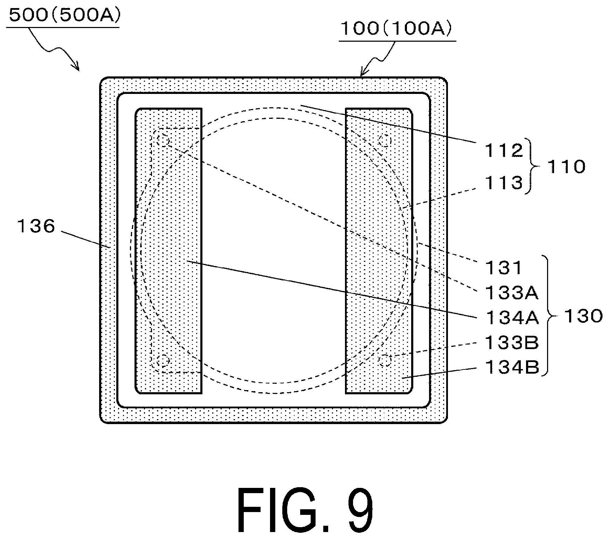

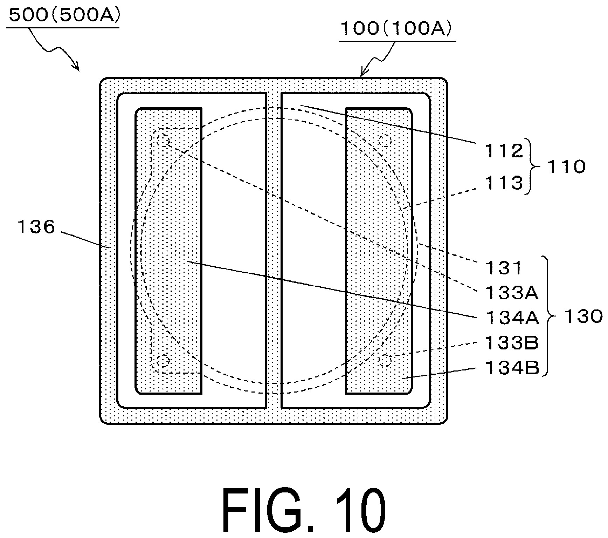

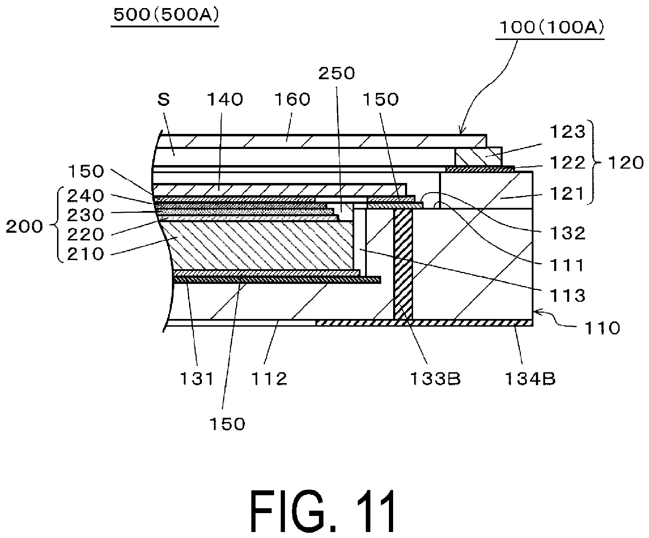

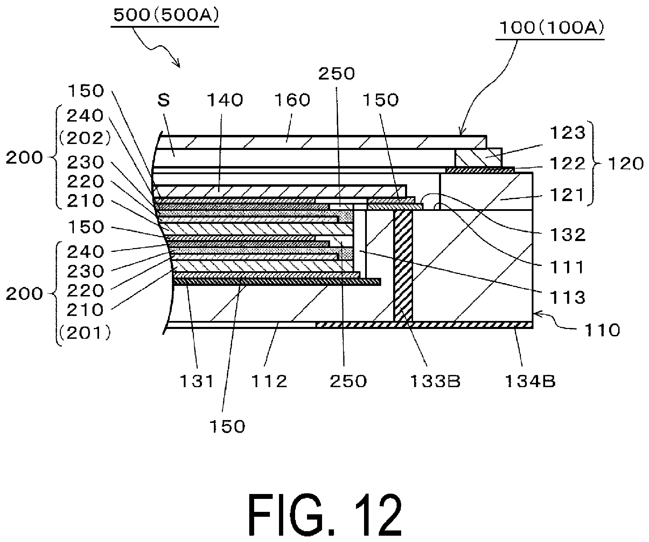

FIG. 1 is a perspective view illustrating an outer appearance of an example of a battery module. FIG. 2 is an exploded perspective view of the battery module of FIG. 1. In FIG. 2, a long dashed line with dot end portions indicates that there is an electrical connection. FIG. 3 is a plan view illustrating an example of the battery module of FIG. 1 in a state in which a lid is removed. FIG. 4 is a plan view illustrating an example of the battery module of FIG. 1 in a state in which the lid and a conductive sheet are removed. FIG. 5 is a cross-sectional view taken along line V-V in FIG. 3. FIG. 6 is a cross-sectional view taken along line VI-VI in FIG. 3. FIG. 7 is a plan view illustrating an example of the battery module of FIG. 1 in a state in which the lid, the conductive sheet, a battery, and the like are removed. FIG. 8 is a bottom view illustrating an example of the battery module of FIG. 1. FIGs. 9 and 10 are bottom views of the battery module of FIG. 1 illustrating a state in which a seal pattern is formed on the second surface of the insulating substrate. FIG. 11 is a partially enlarged cross-sectional view of a battery module using a thin-film type all-solid-state battery as a battery. FIG. 12 is a partially enlarged cross-sectional view of a battery module using a plurality of thin-film type all-solid-state batteries as batteries. In the perspective views, each of the plan views, and the bottom views, a part of the first electrode or the like is shaded with dots so as to be easily distinguished from the others.

As shown in FIGs. 1 to 6, a battery package 100(100A) includes an insulating substrate 110, and the insulating substrate 110 has a first surface 111, a second surface 112 on the side opposite to the first surface 111, and a recessed portion 113 opening in the first surface 111. The battery package 100(100A) includes a frame portion (frame body) 120 surrounding the recessed portion 113 on the first surface 111, and a wiring conductor 130. The wiring conductor 130 includes a first electrode 131 located on the bottom surface of the recessed portion 113, a second electrode 132 located on the first surface 111 between the frame portion 120 and the recessed portion 113, a first external electrode 134A located on the second surface 112, and a second external electrode 134B located on the second surface 112. The battery package 100(100A) includes a conductive sheet 140 electrically connected to the second electrode 132, and the conductive sheet 140 extends over the opening of the recessed portion 113 above the first surface 111. The battery package 100(100A) includes a lid 160 that closes the frame portion 120.

As shown in FIGs. 2, 5 and 6, the recessed portion 113 of the insulating substrate 110 is for accommodating a battery 200. The size of the recessed portion 113 in plan view is larger than the size of the battery 200 in plan view, and the depth of the recessed portion 113 may be about the same as the thickness of the battery 200.

As shown in FIGs. 5 to 8, the first electrode 131 is provided on the bottom surface of the recessed portion 113 of the insulating substrate 110. The first electrode 131 may extend from the bottom surface of the recessed portion 113 to the inside of the insulating substrate 110. The first electrode 131 may cover the entire bottom surface of the recessed portion 113. The extended portion of the first electrode 131 and the first external electrode 134A are electrically connected by a first connection wiring 133A. The first electrode 131 can be electrically connected to a lower surface electrode 201 of the battery 200 accommodated in the recessed portion 113. The lower surface electrode 201 of the battery 200 is a negative electrode or a positive electrode.

When the first electrode 131 extends to the inside of the insulating substrate 110, the first connection wiring 133A is located at a thick portion of the insulating substrate 110 and thus excels in strength. The first electrode 131 need not extend to the inside of the insulating substrate 110, and the first connection wiring may penetrate from the bottom surface of the recessed portion 113 to the second surface 112 to be connected to the first external electrode 134A. In this case, the path from the battery 200 to the first external electrode 134A is short and resistance is further reduced, and hence power can be efficiently extracted from the battery 200 accommodated in the recessed portion 113.

The first external electrode 134A and the second external electrode 134B may extend from the second surface 112 of the insulating substrate 110 to side surfaces (also including a corner between the side surfaces).

The second electrode 132 is provided outside the recessed portion 113 in the first surface 111 of the insulating substrate 110. The second electrode 132 and the second external electrode 134B are electrically connected to each other by a second connection wiring 133B. Since both the first external electrode 134A and the second external electrode 134B are located on the second surface 112 of the insulating substrate 110, the battery package 100(100A), in other words, a battery module 500(500A) can be surface-mounted on a mounting substrate.

As illustrated in FIGs. 5 to 7, the frame portion 120 surrounding the recessed portion 113 is provided on the first surface 111 of the insulating substrate 110. The frame portion 120 is provided at an outer edge portion of the first surface 111, and the second electrode 132 is located on the inner side of the frame portion 120. That is, the second electrode 132 is located between the frame portion 120 and the recessed portion 113 in the first surface 111.

In the battery package 100(100A) of the example illustrated in FIGs. 1 to 12, the frame portion 120 includes an insulating frame body 121, a frame-shaped metal film 122 on the insulating frame body 121, and a metal frame body 123 joined onto the frame-shaped metal film 122 with a brazing material. The insulating frame body 121 is located on the first surface 111 of the insulating substrate 110 and is integrated with the insulating substrate 110. The insulating substrate 110 can also be regarded as having the recessed portion 113 with a small opening at the bottom surface of a recessed portion with a large opening. In other words, the insulating substrate 110 can be regarded as having two stages of recessed portions.

The frame-shaped metal film 122 may be formed by metallization on the upper surface of the insulating frame body 121 made of, for example, ceramic. The metal frame body 123 may be joined, for example, to the frame-shaped metal film 122 with a brazing material. A nickel film may be formed on the surfaces of the metal frame body 123 and the frame-shaped metal film 122 by a plating method to improve joinability with the brazing material. As the metal frame body 123, a material having a small difference in thermal expansion from ceramic may be used, and for example, an iron-nickel (Fe-Ni) alloy or an iron-nickel-cobalt (Fe-Ni-Co) alloy may be used.

As shown in FIGs. 3 and 4, the conductive sheet 140 is provided extending over the opening of the recessed portion 113 above the first surface 111. The conductive sheet 140 is electrically connected to the second electrode 132. Since the conductive sheet 140 extends over the recessed portion 113, it can be electrically connected to an upper surface electrode 202 of the battery 200 accommodated in the recessed portion 113. The upper surface electrode 202 of the battery 200 is a positive electrode or a negative electrode.

As described above, the frame portion 120 includes the insulating frame body 121 located on the first surface 111, and the metal frame body 123 is located over the upper surface of the insulating frame body 121. The conductive sheet 140 is located on the inner side of the insulating frame body 121 on the first surface 111. The surface (first surface 111) on which the conductive sheet 140 is located and the surface (the upper surface of the insulating frame body 121) on which the metal frame body 123 is located are located at different positions in the height direction. Thus, a short circuit between the conductive sheet 140 and the metal frame body 123 can be prevented while suppressing positional displacement of the conductive sheet 140 with respect to the insulating substrate 110. Since there is no short circuit between the conductive sheet 140 and the metal frame body 123, the distance between the conductive sheet 140 and the metal frame body 123 in plan view can be reduced. Therefore, the battery package 100(100A) and the battery module 500(500A) each having a smaller size can be obtained.

In the battery package 100(100A) of the example illustrated in FIGs. 1 to 12, two second electrodes 132 are provided on the first surface 111. The conductive sheet 140 is connected to the two second electrodes 132. That is, the conductive sheet 140 is connected to the wiring conductor 130 at two locations. The conductive sheet 140 may be connected to the second electrode 132 at at least one location.

The conductive sheet 140 may have a size large enough to substantially cover the opening portion of the recessed portion 113. In other words, the conductive sheet 140 may have a size large enough to cover the upper surface electrode 202 of the battery 200 accommodated in the recessed portion 113. The conductive sheet 140 may be connected to the second electrode 132 while covering 50% or more of the opening area of the recessed portion 113. Thus, the conductive sheet 40 can be electrically connected to at least 50% or more of the area of the upper surface electrode 202 of the battery 200. The connection resistance between the conductive sheet 40 and the upper surface electrode 202 of the battery 200 is reduced and the electricity extraction efficiency is increased, by electrically connecting the conductive sheet 40 and 50% or more of the area of the upper surface electrode 202 of the battery 200. The battery 200 can be protected from radiant heat from the lid 160 when the lid 160 is joined or when the battery module 500(500A) is mounted.

As shown in FIGs. 5 and 6, the opening of the frame portion 120 on the opposite side to (upper side of) the insulating substrate 110 is closed by the lid 160. The lid 160 is joined to the metal frame body 123 of the frame portion 120. When the opening of the frame portion 120 is closed by the lid 160, a space S surrounded by the lid 160, the frame portion 120, and the insulating substrate 110 is hermetically sealed. The ratio of the space S to the battery module 500 may be set to, for example, 5% to 30%. The gap amount between the lid 160 and the conductive sheet 140 may be set to, for example, 0.1 mm to 0.8 mm. When the space S or the gap amount described above is set in such a manner, and for example, the battery 200 is expanded or a gas is generated therein with an increase in the temperature of the battery 200, an increase in the internal stress or the internal pressure of the battery 200 is alleviated and the durability of the battery 200 is improved. Even when stress is applied to the lid 160 from the outside, the stress applied to the battery 200 is reduced by the space S between the lid 160 and the battery 200.

The space S may be sealed in an atmosphere such as a nitrogen atmosphere, an argon gas atmosphere, a vacuum, or the like, for example, at a dew point of lower than or equal to - 20°C. In this case, even when the environmental temperature and the humidity increase, the chemical reaction between moisture or oxygen and battery materials is suppressed, improving the heat resistance and the life of the battery 200.

As shown in FIGs. 2, 5, and 6, the battery module 500 is configured by accommodating the battery 200 in the recessed portion 113 of the battery package 100, electrically connecting the lower surface electrode 201 of the battery 200 to the first electrode 131, and electrically connecting the upper surface electrode 202 of the battery 200 to the conductive sheet 140. In other words, the battery module 500 includes the battery package 100 and the battery 200 accommodated in the recessed portion 113 of the battery package 100 and electrically connected to the first electrode 131 and the conductive sheet 140.

As described above, the battery 200 includes the electrodes (the upper surface electrode 202 and the lower surface electrode 201) on the upper surface and the lower surface. The battery 200 including electrodes on the upper and lower sides is surface-mounted on the mounting substrate by accommodating the battery 200 in the battery package 100 of the present disclosure. The internal configuration and materials of the battery 200 are not particularly limited as long as the battery 200 includes electrodes on the upper surface and the lower surface. For example, the battery 200 may be an all-solid-state battery having a structure in which a solid electrolyte is sandwiched between a positive electrode and a negative electrode. The battery 200 may include current collectors on the outer side of the positive electrode and the negative electrode.

As shown in FIG. 9, in the battery package 100(100A) of the example illustrated in FIGs. 1 to 12, a seal pattern 136 surrounding the periphery of the first external electrode 134A and the second external electrode 134B may be located on the second surface 112 of the insulating substrate 110. The seal pattern 136 is made of a conductive material such as a solderable metal. As shown in FIG. 10, the seal pattern 136 may surround each of the periphery of the first external electrode 134A and the periphery of the second external electrode 134B.

Since the seal pattern 136 is made of a solderable conductive material, the first external electrode 134A and the second external electrode 134B located on the inner side of the seal pattern 136 can be sealed by joining the seal pattern 136 and the pattern of the mounting substrate with solder. Then, since the sealing by solder joint can be performed simultaneously with the joining of the first external electrode 134A and the second external electrode 134B with the electrodes of the mounting substrate by solder, efficiency is high and productivity is high, and another sealing material such as a resin or the like is unnecessary. An electric leakage, a short circuit between adjacently mounted electronic components, or the like due to moisture or the like at the time of cleaning after mounting the battery module 500(500A) can be prevented by sealing the first external electrode 134A and the second external electrode 134B.

Note that in the case where the seal pattern 136 is not located on the second surface 112 of the insulating substrate 110, the peripheral edge portion of the battery module 500(500A) can be sealed with a sealing material such as a resin material when the battery module 500(500A) is surface-mounted on the mounting substrate.

In the battery package 100(100A) of the present disclosure, the conductive sheet 140 is connected to the second electrode 132 on the first surface 111 and extends over the opening of the recessed portion 113 for accommodating the battery 200. The second electrode 132 is connected to the second connection wiring 133B in the insulating substrate 110 and connected to the second external electrode 134B on the second surface 112 of the insulating substrate 110. Therefore, an insulator of the insulating substrate 110 is located between the recessed portion 113 for accommodating the battery 200 and the wiring conductor 130 (second connection wiring 133B) located on the side of the recessed portion 113. Thus, the battery package 100(100A) is obtained in which the possibility of a short circuit between the upper surface electrode 202 and the lower surface electrode 201 of the battery 200 accommodated in the recessed portion 113 is reduced.

In the battery package 100(100A) of the present disclosure, the conductive sheet 140 connecting the upper surface electrode 202 of the battery 200 and the wiring conductor 130 (second electrode 132) can be widened to cover the battery 200 accommodated in the recessed portion 113. Therefore, the connecting material connecting the battery 200 accommodated in the recessed portion 113 and the wiring conductor 130 (second electrode 132) has a lower electric resistance than a thin wire. Thus, the battery package 100 of the present disclosure excels in extraction efficiency of power from the battery 200 accommodated in the recessed portion 113.

In the battery package 100(100A) of the present disclosure, the lower surface electrode 201 of the battery 200 and the first external electrode 134A are electrically connected mainly by the first electrode 131 located on the bottom surface of the recessed portion 113 and the first connection wiring 133A. The first electrode 131 is located on the bottom surface of the recessed portion 113 close to the second surface 112 of the insulating substrate 110 where the first external electrode 134A is located. Therefore, the wiring length (current path) of the first connection conductor 133A located between the bottom surface of the recessed portion 113 and the second surface 112 is short. This current path does not include a portion where electric resistance increases, such as a connecting portion like a wire. Therefore, the electric resistance between the lower surface electrode 201 of the battery 200 and the first external electrode 134A is relatively low, and the extraction efficiency of power from the battery 200 is excellent.

In the battery package 100(100A) of the present disclosure, the lid 160 closes the opening of the frame portion 120 located on the outer side of the second electrode 132 connected to the conductive sheet 140. Since the opening of the frame portion 120 is located above the conductive sheet 140, the battery 200 can be hermetically sealed without a short circuit between the lid 160 and the conductive sheet 140.

As described above, in the battery package 100(100A) of the present disclosure, the battery 200 can be hermetically sealed without causing a short circuit between the upper surface electrode 202 and the lower surface electrode 201 of the battery 200, and without being discharged to the outside through the lid 160. Therefore, in the case of the battery package 100(100A) of the present disclosure, power from the battery 200 can be efficiently extracted to the outside through the first external electrode 134A and the second external electrode 134B.

In the case of the battery module 500(500A) of the present disclosure, since the battery 200 is accommodated in the battery package 100(100A) described above, the battery module 500(500A) can be surface-mounted on the mounting substrate, and the power of the battery 200 accommodated in the battery module 500(500A) can be efficiently extracted.

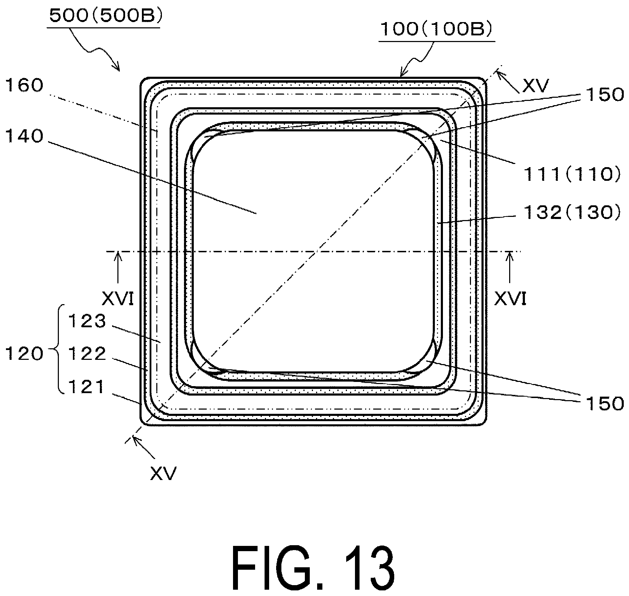

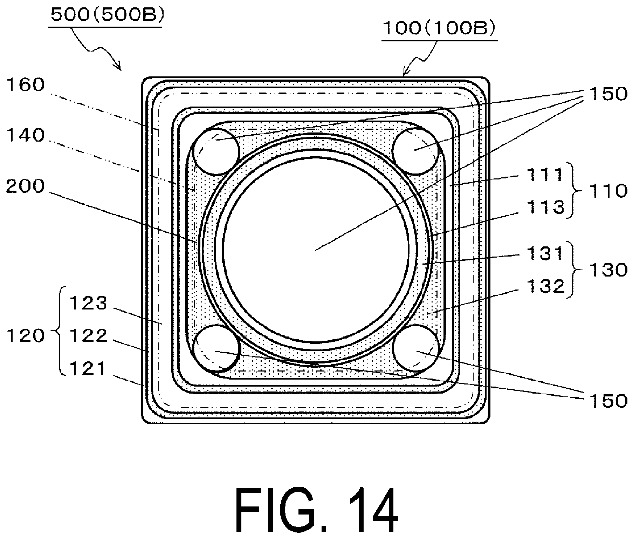

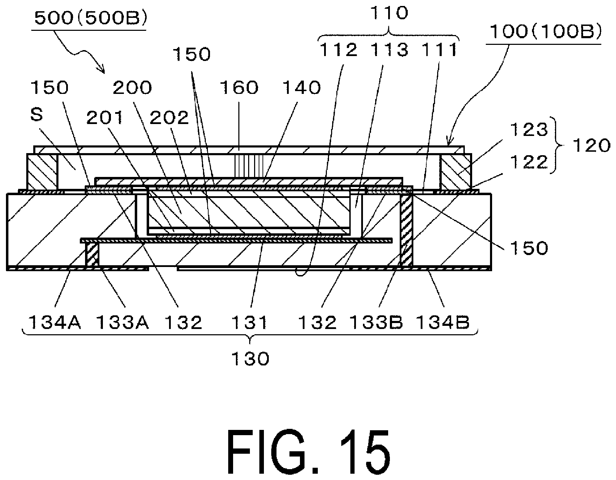

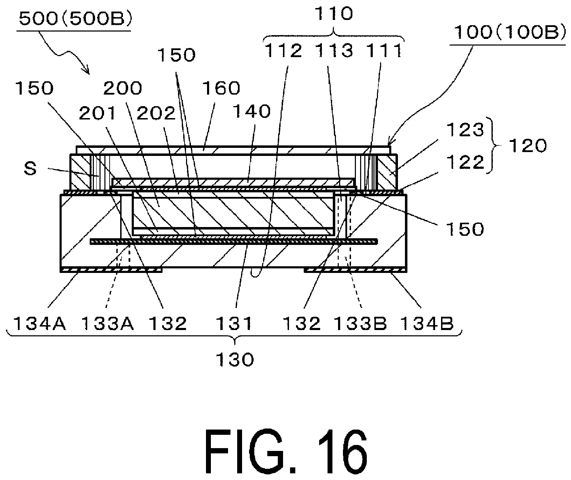

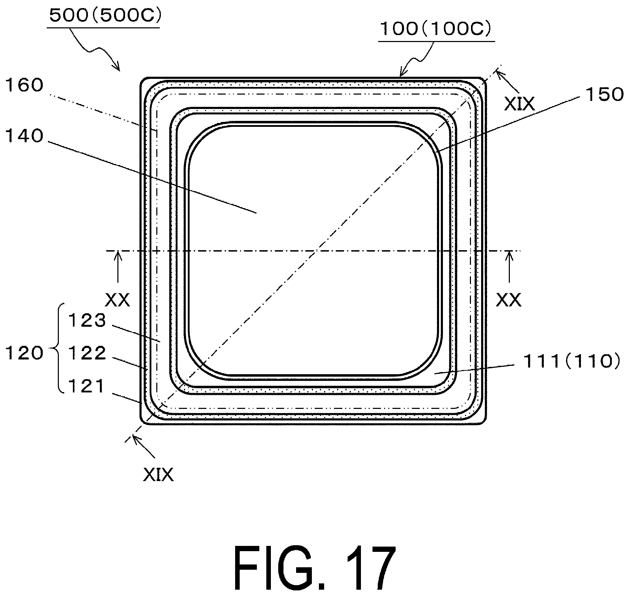

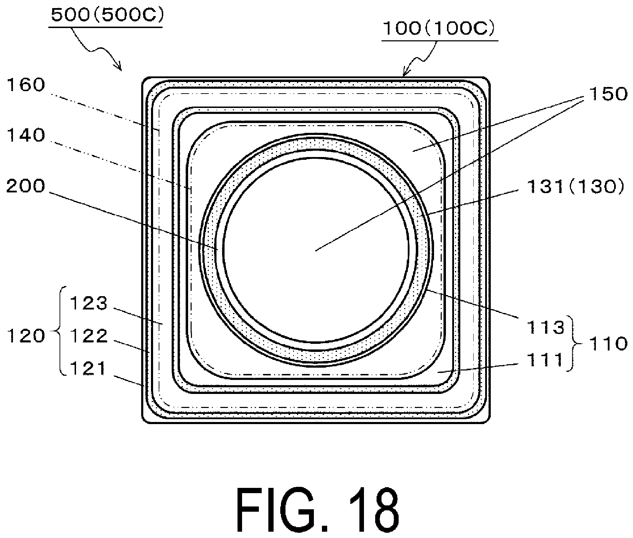

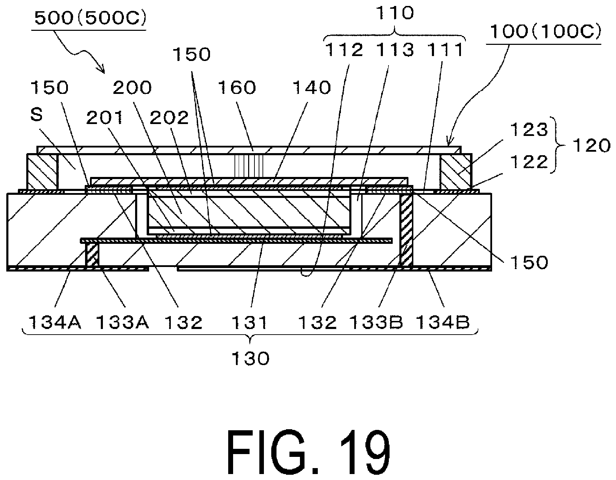

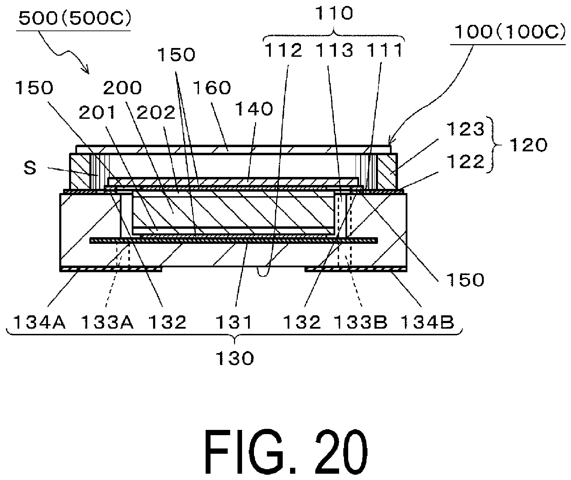

FIG. 13 is a plan view illustrating another example of a battery module in a state in which a lid is removed. FIG. 14 is a plan view illustrating another example of the battery module in a state in which the lid and a conductive sheet are removed. FIG. 15 is a cross-sectional view taken along line XV-XV in FIG. 13. FIG. 16 is a cross-sectional view along line XVI-XVI in FIG. 13. FIG. 17 is a plan view illustrating another example of a battery module in a state in which a lid is removed. FIG. 18 is a plan view illustrating another example of the battery module in a state in which the lid and a conductive sheet are removed. FIG. 19 is a cross-sectional view taken along line XIX-XIX in FIG. 17. FIG. 20 is a cross-sectional view taken along line XX-XX in FIG. 17.

The battery packages 100(100B, 100C) of the battery modules 500(500B, 500C) of the examples illustrated in FIGs. 13 to 20 do not include the insulating frame body 121 unlike the battery package 100 (100A) of the battery module 500(500A) of the example illustrated in FIGs. 1 to 12. As shown in FIGs. 13 to 20, the frame portion 120 includes the frame-shaped metal film 122 provided on the first surface 111 of the insulating substrate 110, and the metal frame body 123 joined on the frame-shaped metal film 122. Accordingly, thinning of the battery packages 100 (100B, 100C) and the battery modules 500(500B, 500C) is promoted. The configurations of the frame-shaped metal film 122 and the metal frame body 123 may be the same as and/or similar to those of the battery package 100(100B, 100C) of the battery module 500(500A) in the example illustrated in FIGs. 1 to 12.

The battery package 100(100A) of the example illustrated in FIGs. 1 to 12 includes two second electrodes 132, and the conductive sheet 140 and the wiring conductor 130 (second electrodes 132) are connected at two locations. In contrast, the battery packages 100(100B, 100C) of the examples illustrated in FIGs. 13 to 20 includes one second electrode 132 having a frame shape along the opening of the recessed portion 113. In the battery package 100(100B) of the example illustrated in FIGs. 13 to 16, the conductive sheet 140 and the wiring conductor 130 (second electrode 132) are connected at four locations. In other words, four corner portions of the conductive sheet 140 and the wiring conductor 130 (second electrode 132) are connected.

As described above, in the battery packages 100(100A, 100B), the conductive sheet 140 and the second electrode 132 are connected at a plurality of locations. Therefore, the connection area between the conductive sheet 140 and the second electrode 132 increases, the connection between the conductive sheet 140 and the second electrode 132 has a lower resistance, and the power of the battery 200 can be more efficiently extracted. In the battery package 100(100B) of the example illustrated in FIGs. 13 to 16, a corner portion of the conductive sheet 140 can be avoided from entering between the battery 200 and the recessed portion 113, and a short circuit can be avoided.

In the battery package 100(100C) of the example illustrated in FIGs. 17 to 20, the second electrode 132 has a frame shape surrounding the recessed portion 113. When the conductive sheet 140 and the second electrode 132 are connected over the entire periphery surrounding the recessed portion 113, the connection area between the conductive sheet 140 and the second electrode 132 further increases. Therefore, the connection between the conductive sheet 140 and the second electrode 132 has a much lower resistance, and the power of the battery 200 can be more efficiently extracted. In the battery package 100(100C) of the example illustrated in FIGs. 17 to 20, a corner portion of the conductive sheet 140 can be avoided from entering between the battery 200 and the recessed portion 113, and a short circuit can be avoided.

As described above, the connection between the conductive sheet 140 and the second electrode 132 is not only an electrical connection but also a mechanical connection. That is, the conductive sheet 140 is fixed to the second electrode 132 at a plurality of locations. A plurality of electrical connecting locations are also a plurality of mechanical fixing locations (a plurality of mechanical connecting locations). Therefore, the strength of the mechanical connection between the conductive sheet 140 and the second electrode 132 and reliability of the connection therebetween improve. The conductive sheet 140 is fixed to the first surface 111 of the insulating substrate 110 by way of a conductive joining material 150 and the second electrode 132.

In the battery package 100(100A) of the example illustrated in FIGs. 1 to 12, the conductive sheet 140 is fixed to the insulating substrate 110 at two locations sandwiching the recessed portion 113 in plan view. In the battery package 100 (100B) of the example illustrated in FIGs. 13 to 16, the conductive sheet 140 is fixed to the insulating substrate 110 at four locations surrounding the recessed portion 113 in plan view. The shape connecting the four connecting locations is a quadrangular shape, and the conductive sheet 140 is fixed to the insulating substrate 110 at four locations sandwiching the recessed portion 113 in plan view. The second electrode 132 of the battery package 100(100C) of the example illustrated in FIGs. 17 to 20 has a frame shape surrounding the recessed portion 113, and the conductive sheet 140 is fixed to the insulating substrate 110 over the entire periphery surrounding the recessed portion 113. It can also be said that the conductive sheet 140 is fixed at a position enclosing the recessed portion 113 from all directions in plan view.

As described above, in the battery package 100(100A, for example), the conductive sheet 140 is fixed to the first surface 111 at the position sandwiching the recessed portion 113 in plan view, and thus the connecting location of the conductive sheet 140 and the portion that is a part of the conductive sheet 140 and is located over the recessed portion 113 sandwiched between the connecting locations do not move in the vertical direction. Therefore, the battery 200 is sandwiched and fixed by the first electrode 131 and the conductive sheet 140. The electrical connection between the electrodes of the battery 200 and the first electrode 131 and the conductive sheet 140 can be suppressed from being lost due to the positional displacement of the battery 200 with respect to the insulating substrate 110. Therefore, an increase in resistance at the connecting portion between the electrodes of the battery 200 and the first electrode 131 and the conductive sheet 140 can be suppressed.

Here, as in the battery package 100(100A) of the example illustrated in FIGs. 1 to 12, even when the conductive sheet 140 and the wiring conductor 130 are connected at two locations, and a line connecting the two connecting locations passes through the end portion of the recessed portion 113, the battery 200 can be held by the conductive sheet 140. As in the battery package 100(100B) of the example illustrated in FIGs. 13 to 16, when the conductive sheet 140 and the wiring conductor 130 are connected at two locations, and the two connecting locations pass through the central portion of the recessed portion 113, the effect of holding the battery 200 by the conductive sheet 140 is further enhanced. When the conductive sheet 140 and the wiring conductor 130 are connected in all directions (frame shape) as in the battery package 100(100C) of the example illustrated in FIGs. 17 to 20, an infinite number of lines passing through the central portion of the recessed portion 113 and connecting two connecting locations exist, and the effect of holding the battery 200 by the conductive sheet 140 is further enhanced.

In the battery package 100(100B) of the example illustrated in FIGs. 13 to 16, the conductive sheet 140 is electrically connected to the insulating substrate 110 at all four fixing locations in order to reduce the resistance of the connection between the conductive sheet 140 and the second electrode 132. When the main purpose is to fix the battery 200, the conductive sheet 140 need not be electrically connected to the insulating substrate 110 at all the plurality of fixing locations. For example, in the battery package 100(100A) of the example illustrated in FIGs. 1 to 12, two of four corner portions of the conductive sheet 140 having a quadrangular shape are connected to the second electrodes 132. The remaining two corner portions of the conductive sheet 140 may be joined to the first surface 111 of the insulating substrate 110, in which case the conductive sheet 140 is fixed to the first surface 111 at positions sandwiching the recessed portion 113 in the diagonal direction of the conductive sheet 140, as in the battery package 100(100B) of the example illustrated in FIGs. 13 to 16. In this case, the conductive sheet 140 is fixed to a portion of the first surface 111 where the second electrode 132 is not provided, without being electrically connected to the portion. A portion of the conductive sheet 140 that is not electrically connected may be joined to the first surface 111 with a non-conductive joining material.

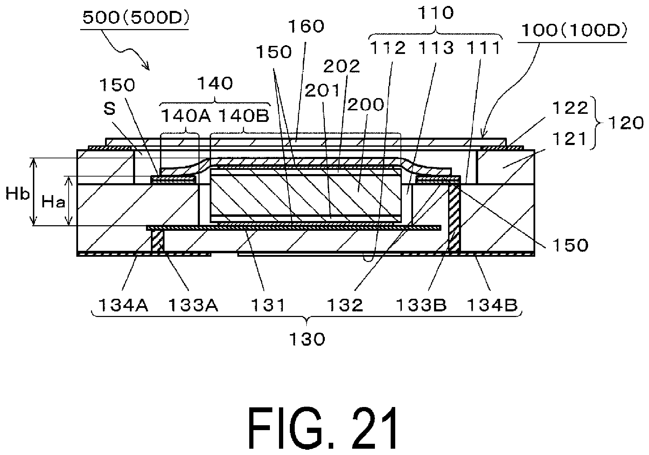

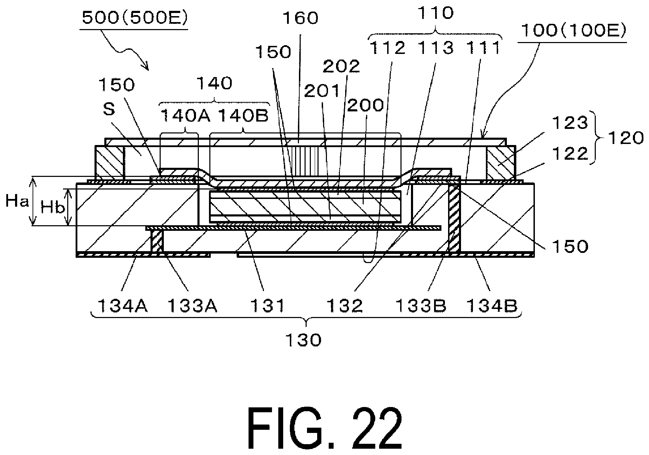

FIGs. 21 and 22 are cross-sectional views illustrating another example of a battery module.

A battery module 500(500D) of the example illustrated in FIG. 21 has a configuration similar to that of the battery module 500(500A) of the example illustrated in FIGs. 1 to 12, and is an example in which the metal frame body 123 of the frame portion 120 is omitted, and the number of connecting locations between the conductive sheet 140 and the second electrode 132 is increased. In the battery module 500(500D) of the example illustrated in FIG. 21, the upper surface of the battery 200 protrudes upward from the opening portion of the recessed portion 113. A central portion of the conductive sheet 140 connected to the upper surface electrode 202 of the battery 200 is curved upward to have a protruding shape.

A battery module 500(500E) of the example illustrated in FIG. 22 has a configuration similar to that of the battery module 500(400B) of the example illustrated in FIGs. 13 to 16, and is an example in which the configuration of the frame portion 120 in the battery module 500(500D) of the example illustrated in FIG. 21 is changed. A battery package 100E of the example illustrated in FIG. 22 has a configuration similar to those of the battery packages 100(100B, 100C) of the examples illustrated in FIGs. 13 to 20. In the battery module 500(500E) of the example illustrated in FIG. 22, the upper surface of the battery 200 is located below the opening portion of the recessed portion 113. A central portion of conductive sheet 140 connected to the upper surface electrode 202 of the battery 200 is curved downward to have a protruding shape.

The conductive sheet 140 connected to the upper surface electrode 202 of the battery 200 has a thin sheet shape. Therefore, as shown in FIGs. 21 and 22, even when the thickness of the battery 200 to be accommodated does not match the depth of the recessed portion 113, the conductive sheet 140 changes its form following the position of the upper surface of the battery 200, and the conductive sheet 140 and the upper surface electrode 202 of the battery 200 are reliably connected. Therefore, the battery package 100 of the present disclosure can incorporate batteries 200 having different sizes, and the versatility of the battery package 100 is enhanced.

Here, in the battery package 100(100D) of the example illustrated in FIG. 21, the upper surface (upper surface electrode 202) of the battery 200 is located above the opening portion of the recessed portion 113. More strictly, the upper surface of the battery 200 is located above the second electrode 132. A central portion of the conductive sheet 140 is curved upward to have a protruding shape. The central portion of the conductive sheet 140 connected to the battery 200 is located at a position higher than the outer edge portion of the conductive sheet 140 connected to the second electrode 132. In other words, in the entire region of the conductive sheet 140, the first region 140B located on the battery 200 is located at a position higher than the second region 140A located on the first surface 111 of the insulating substrate 110. The reference position in height in this case is the surface (upper surface) of the first electrode 131 located on the bottom surface of the recessed portion 113. The reference position may be the second surface 112 of the insulating substrate 110 or the bottom surface of the recessed portion 113.

In the battery module 500(500D) of the example illustrated in FIG. 21, height Hb of the first region 140B located on the battery 200 is higher than height Ha of the second region 140A located on the first surface 111 in the entire region of the conductive sheet 140. As described above, the battery 200 is sandwiched and fixed by the first electrode 131 and the conductive sheet 140. In the battery package 100(100D) of the example illustrated in FIG. 21, the conductive sheet 140 is curved downward at the outer edge of the first region 140B, and the second region 140A is fixed to the first surface 111 of the insulating substrate 110 by way of the second electrode 132 and the like. In other words, the conductive sheet 140 is fixed to the second electrode 132 so as to cover a portion of the battery 200 protruding upward to be higher than the second electrode 132. Thus, the possibility of positional displacement of the battery 200 in the planar direction along the bottom surface of the recessed portion 113 (direction orthogonal to the thickness direction of the battery package 100) is reduced by the conductive sheet 140.

When the conductive sheet 140 is an elastic body, the conductive sheet 140 is brought into contact with the upper surface of the battery 200, and the conductive sheet 140 is slightly stretched and connected to the second electrode 132, so that the battery 200 can be pressed against the first electrode 131 by the elastic force of the conductive sheet 140. Thus, when the battery 200 has a structure in which a positive electrode layer 240, an electrolyte layer 230, and a negative electrode layer 220 are layered, the adhesion between these layers can be increased by pressing the battery 200 with the conductive sheet 140. Therefore, separation or displacement between the members included in the battery 200 can be prevented. The pressure with which the battery 200 is pressed can reduce the electric resistance between the positive electrode layer 240 (negative electrode layer 220) and the electrolyte layer 230, and thus the electricity extraction efficiency can be enhanced.

In the battery module 500(500D) of the example illustrated in FIG. 21, the conductive sheet 140 presses the upper surface electrode 202 of the battery 200, and the conductive joining material 150 is provided between the upper surface electrode 202 of the battery 200 and the conductive sheet 140. Furthermore, the conductive joining material 150 is also provided between the lower surface electrode 201 of the battery 200 and the first electrode 131. In the battery modules 500(500A, for example) of the examples illustrated in FIGs. 1 to 18 and 20 as well, the conductive joining material 150 is provided between the upper surface electrode 202 of the battery 200 and the conductive sheet 140, and between the lower surface electrode 201 of the battery 200 and the first electrode 131.

As described above, in the battery modules 500(500A, for example) of the examples illustrated in FIGs. 1 to 22, the upper surface electrode 202 of the battery 200 and the conductive sheet 140 are joined by the conductive joining material 150, and the lower surface electrode 201 of the battery 200 and the first electrode 131 are joined by the conductive joining material 150. The electrical connection between the upper surface electrode 202 of the battery 200 and the conductive sheet 140 and between the lower surface electrode 201 of the battery 200 and the first electrode 131 may be made by direct contact, but the electric resistance of the connecting portions is further reduced by interposing the conductive joining material 150 therebetween. Since the mechanical connection strength therebetween increases, the possibility of positional displacement of the battery 200 with respect to the insulating substrate 110 is reduced, and the electrical connection reliability of the battery module 500(500A, for example) is improved.

As illustrated in FIGs. 5, 6, 15, 16, and 19 to 22, the lid 160 closes the opening portion of the frame portion 120 and is joined to the upper surface of the frame portion 120. The lid 160 merely needs to be able to seal the opening of the frame portion 120 by closing it. When the lid 160 is made of ceramic or metal, the battery package 100(100A, for example) becomes robust to external impact and excels in hermetic sealing property, and the connection reliability of the battery 200 improves. As a constituent material of the lid 160, a material having a small thermal expansion difference from the insulating substrate 110 made of ceramic, for example, an iron-nickel (Fe-Ni) alloy or an iron-nickel-cobalt (Fe-Ni-Co) alloy may be used.

Examples of joining the lid 160 to the frame portion 120 include joining using a joining material such as a resin adhesive, glass, a brazing material containing solder, or the like. In terms of airtightness, joining using glass or a brazing material as a joining material is preferable. When joining the lid 160 and the frame portion 120 with a brazing material, the frame-shaped metal film 122 or the metal frame body 123 is located at the upper surface of the frame portion 120. The outer edge portion of the lower surface of the lid 160 made of ceramic is also provided with a film same as and/or similar to the frame-shaped metal film 122.

When the lid 160 is made of metal, the lid 160 can be joined to the frame portion 120 by welding. In the battery package 100, the lid 160 is made of metal and is welded to the frame portion 120. The hermetic sealing property of the battery package 100 improves. The lid 160 may be joined to the metal frame body 123 of the frame portion 120 as in the examples illustrated in FIGs. 5, 6, 15, 16, 19, 20, and 22, or may be joined to the frame-shaped metal film 122 of the frame portion 120 as in the example illustrated in FIG. 21.

When the lid 160 is joined (welded) to the metal frame body 123 of the frame portion 120, for example, seam welding is used. When joining the lid 160 to the frame-shaped metal film 122 of the frame portion 120, direct seam welding, laser welding, or electron beam welding is used. When a joining material such as a brazing material is used, the lid 160 is joined to the frame portion 120 through whole heating by reflow heating. In contrast, in the case of seam welding, direct seam welding, laser welding, or electron beam welding, the welding is performed by local heating of only the joining portion, and thus the influence of heat on the battery 200 is reduced. In particular, seam welding is resistance welding via the metal frame body 123, and is advantageous in local heating of the joining portion.

The frame portion 120 includes the frame-shaped metal film 122 on the insulating frame body 121. The frame portion 120 includes the frame-shaped metal film 122 and the metal frame body 123 on the insulating frame body 121. In these cases, the joining portion of the lid 160 and the frame-shaped metal film 122 or the metal frame body 123 is separated from the joining portion of the battery 200 and the conductive sheet 140 and the connecting portion of the conductive sheet 140 and the second electrode 132. Accordingly, a thermal conduction path from the joining portion of the lid 160 to the battery 200 and the like is long, and such a thermal conduction path includes the insulating frame body 121 having a relatively low thermal conductivity. Thus, the influence on the battery 200 by the heat generated at the time of joining the lid 160 to the frame portion 120 is further reduced.

Current is applied to the lid 160 at the time of seam welding, but since the lid 160 is not electrically connected to the battery 200, the battery 200 is not damaged by the current at the time of seam welding. Since the conductive sheet 140 is located between the lid 160 and the battery 200, the influence on the battery 200 by radiant heat from the lid 160 generated at the time of welding is also reduced.

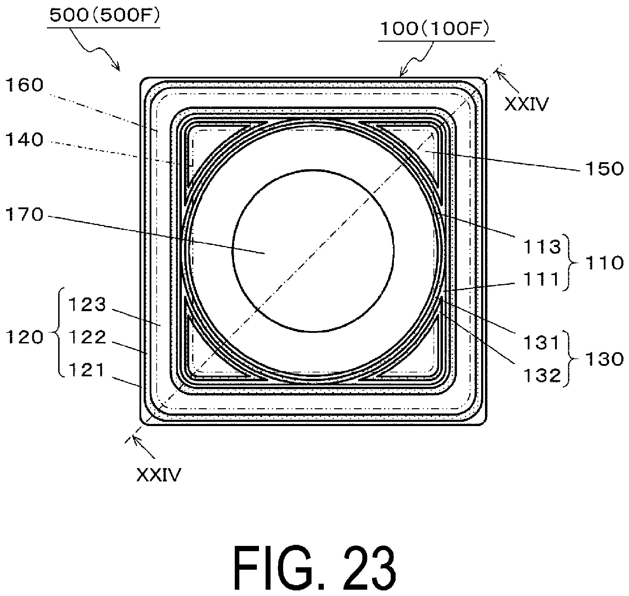

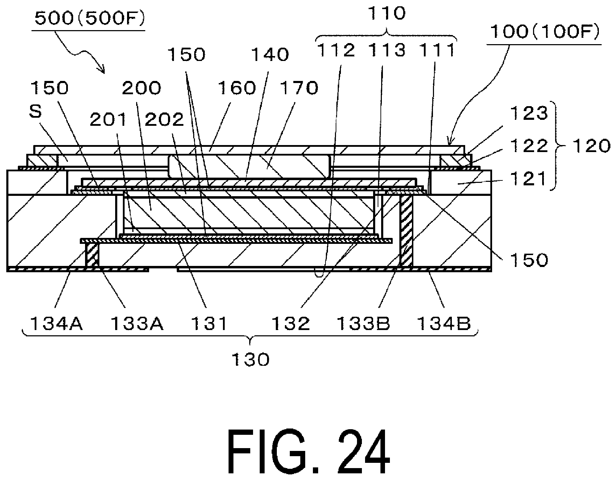

FIG. 23 is a plan view illustrating another example of a battery module in a state in which a lid and a conductive sheet are removed. FIG. 24 is a cross-sectional view taken along line XXIV-XXIV in FIG. 23.

In a battery module 500(500F) of the example illustrated in FIGs. 23 and 24, a spacer 170 is interposed between the lid 160 and the conductive sheet 140, unlike in the battery modules 500(500A, for example) of the examples illustrated in FIGs. 1 to 22. In a battery package 100(100F) of the example illustrated in FIGs. 23 and 24, the spacer 170 may be located between the lid 160 and the conductive sheet 140, and may be in contact with the lid 160 and the conductive sheet 140. As the spacer 170, an elastic body such as rubber or spring may be used.

For example, when the spacer 170 made of rubber resin (elastic body) is used, the conductive sheet 140 is pressed against the upper surface electrode 202 of the battery 200 by the elastic force of the spacer 170 by making the thickness of the spacer 170 larger than the interval between the lid 160 and the conductive sheet 140. Even when the spacer 170 that is harder and less likely to change its form is used, the spacer 170 is pressed against the conductive sheet 140 by the elasticity of the lid 160 having a thin plate shape and the conductive sheet 140 can be pressed against the upper surface electrode 202 of the battery 200, by making the thickness of the spacer 170 larger than the interval between the upper surface of the frame portion 120 (metal frame body 123) and the upper surface of the conductive sheet 140.

Furthermore, as the spacer 170, butyl rubber or the like that can be thermally expanded after sealing with the lid 160 is performed may be used. In this case, the butyl rubber or the like is in contact with one of the lid 160 and the conductive sheet 140 at the time of sealing with the lid 160. The butyl rubber or the like is brought into contact with both the lid 160 and the conductive sheet 140 by being thermally expanded after the sealing with the lid 160. Therefore, heat at the time of joining the lid 160 is not transmitted to the battery 200 via the spacer 170, and the possibility of breakage of the battery 160 is reduced.

Since the conductive sheet 140 is pressed against the battery 200 by the spacer 170, electric resistance between the conductive sheet 140 and the battery 200 is reduced, and the possibility of positional displacement of the battery 200 with respect to the insulating substrate 110 is reduced. In the battery module 500(500F) of the example illustrated in FIGs. 23 and 24, such an effect can be exhibited regardless of the presence or absence of the conductive joining material 150 between the conductive sheet 140 and the upper surface electrode 202 of the battery 200.

The spacer 170 made of an insulating material may be used so as to prevent discharge from the lid 160 due to a short circuit between the lid 160 and the upper surface electrode of the battery 200. Even if the spacer 170 does not have an insulating property, when the electric resistance of the spacer 170 is sufficiently higher than the electric resistance of the conductive sheet 140, most of the current from the battery 200 flows to the conductive sheet 140, so that discharge from the lid 160 can be suppressed. In other words, when the electrical conductivity of the spacer 170 is sufficiently low as compared with the electrical conductivity of the conductive sheet 140, discharge from the lid 160 can be suppressed.

When the spacer 170 is made of a conductive material, an insulating film may be provided on the lower surface of the spacer 170. A protective sheet having an insulating property for protecting the battery 200 may be provided between the spacer 170 and the conductive sheet 160.

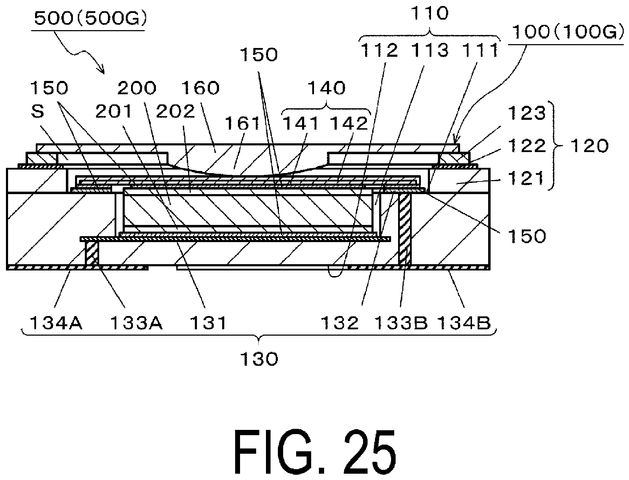

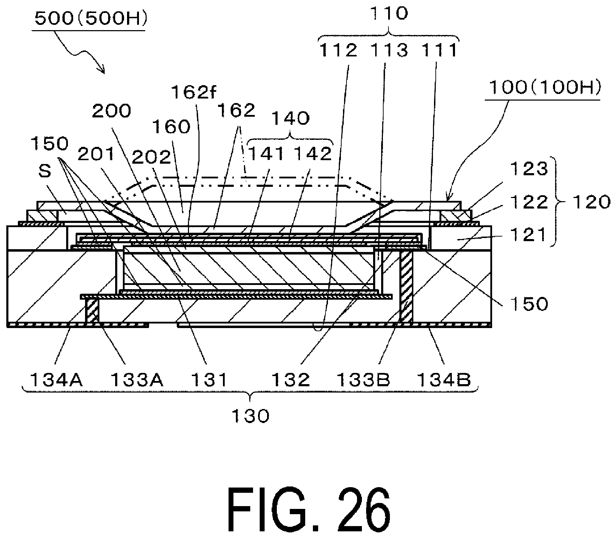

FIGs. 25 and 26 are cross-sectional views illustrating other examples of a battery module.

In a battery package 100(100G) of the example illustrated in FIG. 25, the lid 160 includes a convex portion 161 in contact with the conductive sheet 140. The convex portion 161 is formed so as to protrude downward by increasing the thickness of a central portion of the lid 160. The lid 160 including the convex portion 161 may be produced by joining the convex portion 161 to a flat plate, or may be produced by metal mold pressing or the like.

When the lid 160 includes the convex portion 161 as described above, the conductive sheet 140 is pressed against the upper surface electrode 202 of the battery 200 without using the spacer 170. That is, the convex portion 161 located on the lower surface of the lid 160 can press the conductive sheet 140 against the upper surface electrode 202 of the battery 200. When the conductive sheet 140 is pressed against the upper surface electrode 202 of the battery 200 by the convex portion 161, the electric resistance between the conductive sheet 140 and the battery 200 is reduced, and the power extraction efficiency of the battery 200 is increased. In particular, when the convex portion 161 has a flat pressing surface, an area of a portion in the conductive sheet 140 that is uniformly pressed is increased, and the power extraction efficiency of the battery 200 is further enhanced. The possibility of positional displacement of the battery 200 with respect to the insulating substrate 110 is reduced.

In a battery package 100(100H) of the example illustrated in FIG. 26, the lid 160 has a plate shape, and the thickness of the entire region of the lid 160 is substantially even. The lid 160 includes a protruding portion 162 in contact with the conductive sheet 140. The protruding portion 162 is formed such that a central portion of the lid 160 protrudes downward. The protruding portion 162 has a flat pressing surface 162f for pressing the conductive sheet 140 toward the battery 200 side. The area of the pressing surface 162f of the protruding portion 162 is preferably greater than or equal to 50% of the opening area of the recessed portion 113.

The protruding portion 162 may press the conductive sheet 140 from above toward the battery 200 side by vertical inversion. In FIG. 26, the protruding portion 162 in a state before the inversion is indicated by an alternate long and two short dashed line. It is desirable to seal the space S in a state in which the pressure is reduced to lower than the atmospheric pressure so that the protruding portion 162 can be easily inverted vertically. The lid 160 including the protruding portion 162 may be produced by punching a metal plate. The lid 160 including the protruding portion 162 may be produced by punching a metal plate and performing press working. The protruding portion 162 may have a curved pressing surface instead of the flat pressing surface 162f.

When the lid 160 includes the protruding portion 162 as described above, the conductive sheet 140 is pressed against the upper surface electrode 202 of the battery 200 without using the spacer 170. That is, the protruding portion 162 located on the lower surface of the lid 160 can press the conductive sheet 140 against the upper surface electrode 202 of the battery 200. When the conductive sheet 140 is pressed against the upper surface electrode 202 of the battery 200 by the protruding portion 162, the electric resistance between the conductive sheet 140 and the battery 200 is reduced, and the power extraction efficiency of the battery 200 is increased. In particular, when the protruding portion 162 has the flat pressing surface 162f, an area of a portion in the conductive sheet 140 that is uniformly pressed is increased, and the power extraction efficiency of the battery 200 is further enhanced. The possibility of positional displacement of the battery 200 with respect to the insulating substrate 110 is reduced.

When the protruding portion 162 presses the conductive sheet 140 by inversion after joining of the lid 160, the protruding portion 162 is not inverted at the time of joining of the lid 160 and is not in contact with the conductive sheet 140, and thus heat at the time of joining of the lid 160 is less likely to be conducted to the conductive sheet 140 and the battery 200. When the lid 160 is joined by seam welding (resistance welding), for example, current applied at the time of joining the lid 160 is also not conducted to the battery 200 and the like. Therefore, the possibility of deterioration and breakage of the battery 200 is reduced. When the battery 200 is expanded or a gas is generated therein with an increase in the temperature of the battery 200, the protruding portion 162 is inverted to have an outward protruding shape and the internal space S increases, so that an increase in the internal pressure can be alleviated.

In the battery modules 500(500G, 500H) of the examples illustrated in FIGs. 25 and 26, the conductive sheet 140 includes a conductor sheet 141 and an insulator sheet 142. The conductor sheet 141 electrically connects the battery 200 and the wiring conductor 130 (second electrode 132). The insulator sheet 142 ensures the insulating property between the conductor sheet 141 and the lid 160 made of metal.

The conductive sheets 140 in the battery modules 500 (500G, 500H) may have a structure in which a copper foil and an insulating resin such as a polyimide resin are layered as in, for example, a flexible substrate. When the lid 160 is made of a conductive material such as metal and the conductive sheet 140 does not include the insulator sheet 142, an insulating film may be provided on at least a portion (pressing surface) of a lower surface (surface on the conductive sheet 140 side) of the lid 160 that is to be brought into contact with the conductive sheet 140.

When the electric resistance of the lid 160 is sufficiently higher than the electric resistance of the conductive sheet 140, most of the current from the battery 200 flows to the conductive sheet 140, so that discharge from the lid 160 can be suppressed. In other words, when the electrical conductivity of the lid 160 is sufficiently low as compared with the electrical conductivity of the conductive sheet 140, discharge from the lid 160 can be suppressed. For example, when the lid 160 is made of an iron-nickel (Fe-Ni) alloy or an iron-nickel-cobalt (Fe-Ni-Co) alloy described above, a low resistance metal such as copper or aluminum may be used as a constituent material of the conductive sheet 140.

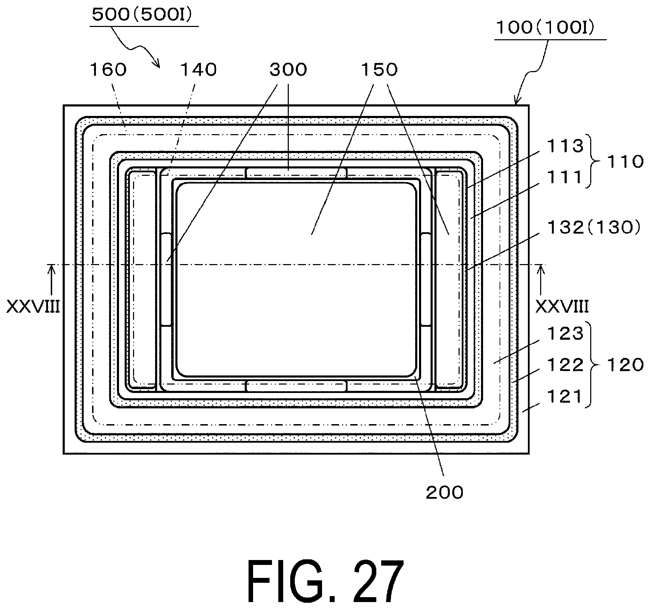

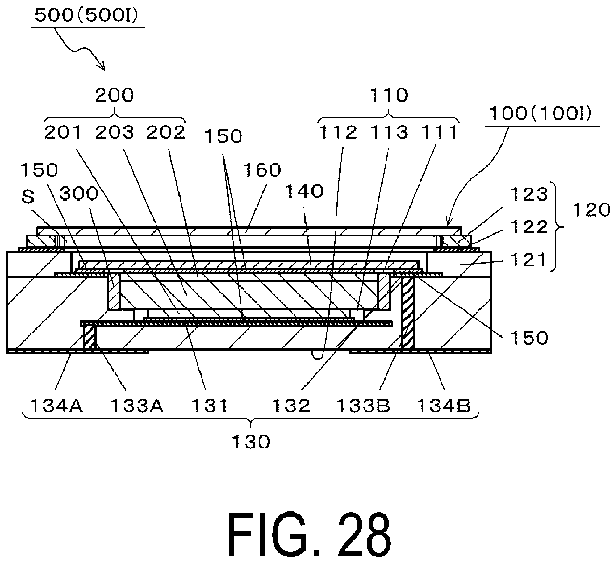

FIG. 27 is a plan view illustrating another example of a battery module in a state in which a lid and a conductive sheet are removed. FIG. 28 is a cross-sectional view taken along line XXVIII-XXVIII in FIG. 27.

An example in which the recessed portion 113 of the insulating substrate 110 has a cylindrical shape with a circular shape in plan view and an even depth has been described, but the shape of the recessed portion 113 is not limited thereto, and can be a shape according to the shape of the battery 200. For example, the shape of the recessed portion 113 of the battery package 100(100I) in plan view of the example illustrated in FIGs. 27 and 28 is a rectangular shape. The rectangular shape means not only an exact rectangle with right corners but also a rectangle with rounded corner portions. The shape of the recessed portion 113 in plan view may be a polygonal shape other than a quadrangular shape or an elliptical shape. The recessed portion 113 has an uneven depth and has a shape in which a central portion thereof has a deeper depth, and thus, the recessed portion 113 is a two-step recessed portion. When also including the insulating frame body 121 integrated with the insulating substrate 110, the recessed portion 113 can be said to be a three-step recessed portion.

The battery 200 of the battery module 500(500I) of the example illustrated in FIGs. 27 and 28 includes an upper surface electrode 202, a lower surface electrode 201, and a solid electrolyte 203 sandwiched between the upper surface electrode 202 and the lower surface electrode 201. The lower surface electrode 201 has a shape slightly smaller than the solid electrolyte 203 and the upper surface electrode 202, and the cross-sectional shape of the battery 200 of the example illustrated in FIGs. 27 and 28 is a downward protruding shape (T-shape). The cross-sectional shape of the recessed portion 113 is a shape according to the cross-sectional shape of the battery 200 of the example illustrated in FIGs. 27 and 28.

In the battery module 500(500I) of the example illustrated in FIGs. 27 and 28, the size of the recessed portion 113 in plan view is larger than the size of the battery 200 in plan view, and there is a gap between the battery 200 and the inner wall of the recessed portion 113. The insulating member 300 is inserted into this gap. As described above, in the battery module 500(500I) of the example illustrated in FIGs. 27 and 28, the insulating member 300 is located between the side surface of the battery 200 and the inner side surface of the recessed portion 113. The insulating member 300 further reduces the possibility of positional displacement of the battery 200 with respect to the insulating substrate 110. When the insulating member 300 has adhesiveness, the battery 200 is more firmly fixed to the recessed portion 113. Since the insulating member 300 has an insulating property, the insulating property between the side surface of the battery 200 and the second electrode 132 is further enhanced. Since the gap between the side surface of the battery 200 and the inner side surface of the recessed portion 113 is filled with the insulating member 300, the possibility of a short circuit between the upper surface electrode 202 and the lower surface electrode 201 through the conductive sheet 140 is reduced.

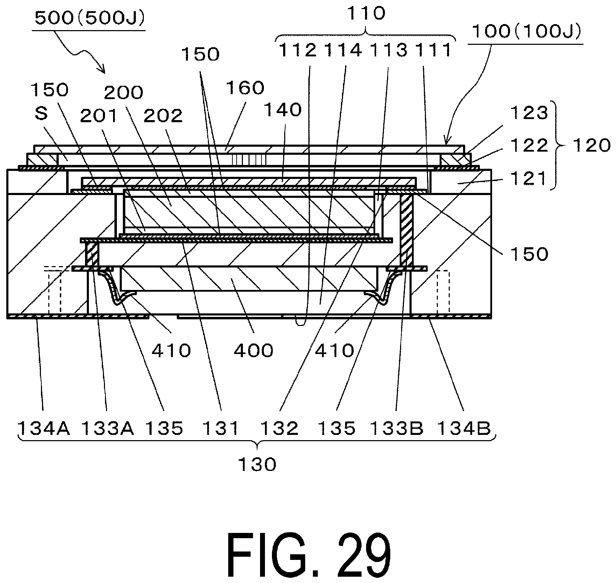

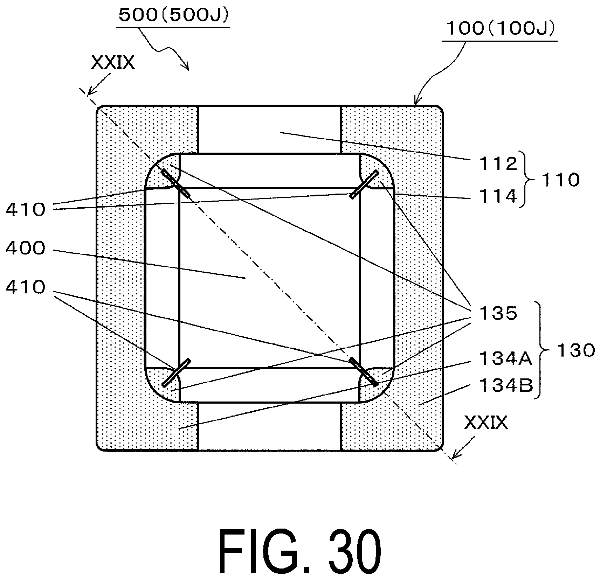

FIG. 29 is a cross-sectional view taken along line XXIX-XXIX in FIG. 30. FIG. 30 is a bottom view of another example of a battery module.

Only an example of the battery package 100 that accommodates only the battery 200 has been described, but an electronic component 400 and the like other than the battery 200 may be accommodated in the battery package 100(100J) of the example illustrated in FIGs. 29 and 30. At this time, a space for accommodating the electronic component 400 may be provided, whereby the battery 200 and the electronic component 400 may be arranged overlapping each other in plane perspective so that the battery package 100(100J) and the battery module 500(500J) do not increase in size. To this end, the insulating substrate 110 of the battery package 100(100J) illustrated in the example of FIGs. 29 and 30 has a second recessed portion 114 for accommodating the electronic component 400, and the second recessed portion 114 opens in the second surface 112. As a result, the wiring length of the wiring connecting the battery 200 and the electronic component 400 can be shortened, and the resistance of the wiring is low.

In the second recessed portion 114, for example, a power supply IC for controlling the battery 200 may be mounted as the electronic component 400. The power supply IC is a semiconductor element for battery control. The power supply IC includes a DC/DC converter that supplies a constant power supply voltage, a reset IC that monitors the power supply, and a switch IC that turns on/off the power supply. The recessed portion 113 opening in the first surface 111 and the second recessed portion 114 opening in the second surface 112 are at positions overlapping each other in plane perspective. The battery 200 and the electronic component 400 (power supply IC) are mounted in an overlapping manner in plane perspective. Therefore, the operation of the battery 200 can be controlled, and the size of the battery module 500(500J) can be reduced.

In the battery module 500(500J) of the example illustrated in FIGs. 29 and 30, the electronic component 400 is fixed to the bottom surface of the second recessed portion 114 with a joining material that is not illustrated. An electrode (not illustrated) of the electronic component 400 and an internal electrode 135 provided on the bottom surface of the second recessed portion 114 are electrically connected by a bonding wire (conductive connecting material 410). The electrode of the electronic component 400 and the internal electrode 135 may be electrically and mechanically connected by flip-chip connection.

In addition to the power supply IC, for example, the electronic component 400 such as a coil, a capacitor, or the like may be mounted in the second recessed portion 114. In the battery module 500(500J) of the example illustrated in FIGs. 29 and 30, the opening of the second recessed portion 114 may be closed with a lid (not illustrated), or may be sealed by covering the electronic component 400 with a sealing resin.

In the battery packages 100(100A, for example) of the examples illustrated in FIGs. 1 to 30, the dimension of the insulating substrate 110 is, for example, such that the length of one side of the quadrangle is 1 mm to 20 mm, and the thickness of the insulating substrate 110 is 0.5 mm to 5 mm. The dimension of the recessed portion 113 of the insulating substrate 110 can be set according to the size of the battery 200.

In the battery packages 100(100A, for example) of the examples illustrated in FIGs. 1 to 30, the insulating substrate 110 is formed by layering a plurality of insulating layers. The insulating layers are made of an insulating material such as an aluminum oxide sintered body, a glass ceramic sintered body, a mullite sintered body, an aluminum nitride sintered body, or the like.

When the insulating layers are made of, for example, an aluminum oxide sintered body, the insulating substrate 110 is produced in the following manner. That is, first, ceramic green sheets to be insulating layers are produced. A plurality of quadrangular sheet-shaped ceramic green sheets are produced by forming raw material powder of aluminum oxide, silicon oxide, and the like into a sheet shape together with an appropriate organic binder and organic solvent. Next, a laminate body is produced by layering these ceramic green sheets. The recessed portion 113 is formed by providing a through hole in the ceramic green sheets using a metal mold or the like. Thereafter, the laminate body is fired at a temperature of 1300 to 1600°C to produce the insulating substrate 110. When the frame portion 120 includes the insulating frame body 121, the insulating frame body 121 is formed simultaneously with the insulating substrate 110. A laminate body including a frame-shaped green sheet in which a through hole is provided with a metal mold or the like may be produced.

In the battery packages 100(100A, for example) of the examples illustrated in FIGs. 1 to 30, the wiring conductor 130 (first electrode 131, second electrode 132, first connection wiring 133A, second connection wiring 133B, first external electrode 134A, second external electrode 134B) is provided on the surface of the insulating substrate 110 and inside thereof. The frame-shaped metal film 122 is provided on the first surface 111 of the insulating substrate 110 or the insulating frame body 121 of the frame portion 120.

In the battery packages 100(100A, for example) of the examples illustrated in FIGs. 1 to 30, the first connection wiring 133A connecting the first electrode 131 and the first external electrode 134A and the second connection wiring 133B connecting the second electrode 132 and the second external electrode 134B are through-hole conductors penetrating the insulating substrate 110, for example. The first connection wiring 133A and the second connection wiring 133B are not limited thereto, and may include a conductor layer extending, inside the insulating substrate 110, in the surface direction of the first surface 111 and the second surface 112. The first connection wiring 133A or the second connection wiring 133B may be connected to the first external electrode 134A or the second external electrode 134B through the side surface from the inside of the insulating substrate 110. The side surface conductor forming a part of the first connection wiring 133A and the second connection wiring 133B may be a conductor filled in a recessed portion (groove portion) provided in the side surface of the insulating substrate 110.

In the battery packages 100(100A, for example) of the examples illustrated in FIGs. 1 to 30, the first electrode 131 and the first external electrode 134A may overlap each other in plane perspective. The second electrode 132 and the second external electrode 134B may overlap each other in plane perspective. In this case, the first connection wiring 133A and the second connection wiring 133B serving as the through-hole conductors can be shortened to suppress power loss by the wirings.

In the battery packages 100(100A, for example) of the examples illustrated in FIGs. 1 to 30, the first external electrode 134A and the second external electrode 134B may extend from the second surface 112 to the side surface of the insulating substrate 110. In order to reduce the electric resistance of the wiring conductor 130 and improve the extraction efficiency of power from the battery 200, for example, a plurality of first connection wirings 133A (through-hole conductors) and a plurality of second connection wirings 133B (through-hole conductors) may be provided. In the battery package 100(100A) of the example illustrated in FIGs. 1 to 12, the number of the first connection wirings 133A (through-hole conductors) and the number of the second connection wirings 133B (through-hole conductors) are one or two, but may be more than two.

The wiring conductor 130 and the frame-shaped metal film 122 mainly contain, for example, a metal such as tungsten, molybdenum, manganese, copper, silver, palladium, gold, platinum, nickel, or cobalt or a metal material of an alloy containing these metals as a conductor material. Such a metal material is provided on the surface of the insulating substrate 110, as a metal layer such as a metallized layer or a plated layer. The metal layer may be a single layer or a plurality of layers. The metal layer may be provided inside the insulating substrate 110 by metallization.

The conductor layer extending in the surface direction of the first surface 111 and the second surface 112 and the frame-shaped metal film 122 can be formed as below when they are, for example, metallized layers of tungsten. The conductor layer and the frame-shaped metal film 122 can be formed by a method of printing a metal paste produced by mixing tungsten powder with an organic solvent and an organic binder at a predetermined position on the ceramic green sheets to be the insulating substrate 110 by a method such as a screen printing method and then performing firing. The conductor layer includes the first electrode 131, the second electrode 132, the first external electrode 134A, the second external electrode 134B, and the like of the wiring conductor 130. The seal pattern 136 can also be formed using a material and a manufacturing method same as and/or similar to those of the wiring conductor 130 and the like, and can be printed simultaneously with the first external electrode 134A and the second external electrode 134B. Therefore, it is easy to form the seal pattern 136.

A plating layer of nickel, gold, or the like may be deposited on the exposed surface of the metallized layer exposed to the outside, such as the first electrode 131, the second electrode 132, the first external electrode 134A, the second external electrode 134B, the seal pattern 136, and the frame-shaped metal film 122 by a plating method such as an electrolytic plating method or an electroless plating method. The through-hole conductors of the first connection wiring 133A and the second connection wiring 133B can be formed by providing through holes at predetermined positions on the ceramic green sheets prior to the printing of the metal paste, and filling the through holes with the metal paste.

A large number of wiring substrates including the insulating substrate 110, the wiring conductor 130, and the like may be formed from a plurality of substrate regions arrayed on a motherboard. A plurality of wiring substrates can be produced more efficiently by dividing the motherboard into substrate regions. In this case, a dividing groove may be provided along the boundary between the substrate regions on the motherboard.

In the battery packages 100(100A, for example) of the examples illustrated in FIGs. 1 to 30, the conductive sheet 140 is made of a conductive material, has a sheet-like shape, and has a size large enough to cover 50% or more of the area of the upper surface electrode 202 of the battery 200 and allow connection therewith. As the conductive material, a material containing a metal such as copper or aluminum, an alloy such as stainless steel, or the like may be used. The conductive sheet 140 may be made of only a conductive material, or may be made of a composite material of a conductive material and an insulating material. The conductive sheet 140 may have a structure in which a copper foil and an insulating resin such as a polyimide resin are layered as in the flexible substrate described above.

The number of batteries 200 accommodated in the recessed portion 113 of the battery package 100 is not limited to one, and may be plural. A plurality of batteries 200 may be accommodated in one recessed portion 113 such that they are arranged in the surface direction (direction orthogonal to the thickness direction) of the bottom surface of the recessed portion 113, and the plurality of batteries 200 may be connected to one conductive sheet 140. A plurality of recessed portions 113 may be provided in the first surface 111 of the insulating substrate 110 in the surface direction, the battery 200 may be accommodated in each of the plurality of recessed portions 113, and the plurality of batteries 200 may be connected to one conductive sheet 140 overlapping the plurality of recessed portions 113. In this case, the plurality of first electrodes 131 located on the respective bottom surfaces of the plurality of recessed portions 113 may be connected to one first external electrode 134A. One large first electrode 131 connected to the first external electrode 134A may be exposed on the bottom surfaces of the plurality of recessed portions 113. The plurality of batteries 200 may be accommodated in an overlapping manner in one recessed portion 113 so as to be connected in series in the thickness direction (the depth direction of the recessed portion). In this case, the upper and lower batteries 200 are connected (joined) by contact connection or a conductive joining material.

As described above, the volume energy density of the battery module 500(500A, for example) can be improved by mounting the plurality of batteries 200 in one battery package 100(100A, for example), as compared with the case where only one battery 200 is mounted. Furthermore, the material cost of the battery package 100(100A, for example) can be reduced, the entire battery mounting area can be downsized, and mounting efficiency can be enhanced by mounting the plurality of batteries 200 in one battery package 100(100A, for example) as compared with the case where the battery package 100(100A, for example) on which one battery 200 is mounted is arranged.

In the conductive sheet 140 of the examples illustrated in FIGs. 25 and 26, only the upper surface of the conductor sheet 141 on the lid 160 side is covered with the insulator sheet 142. A portion other than a portion connected to the battery 200 and the second electrode 132 on the lower surface of the conductor sheet 141 on the battery 200 side may also be covered with the insulator sheet 142. As the composite material, for example, a conductive resin obtained by dispersing a conductive material in a resin, or a conductive resin in which a conductive material is bonded with a resin may be used. As described above, the conductive sheet 140 is connected to the second electrode 132 by way of the conductive joining material 150, but when the conductive sheet 140 is made of a metal foil, the conductive sheet 140 may be joined to the second electrode 132 by resistance welding.

As the conductive joining material 150, solder or a conductive adhesive may be used. As the conductive joining material 150, a conductive adhesive that allows joining at a low temperature may be used. As the conductive joining material 150, silver nano paste may be used for electrical connection at a lower temperature.

In the battery package 100(100F) of the example illustrated in FIGs. 23 and 24, the spacer 170 is not limited to being made of the resin described above, and may be made of, for example, ceramic or metal. When the spacer 170 is made of a conductive material such as metal, the surface of the spacer 170 may be covered with an insulating material.

The battery module 500 may include a desiccant (not illustrated) that absorbs moisture. The desiccant may be located on the lower surface of lid 160, or may be located on the lower side of the lower surface electrode 201 of the battery 200. When the desiccant is located on the lower side of the lower surface electrode 201 of the battery 200, another small recessed portion may be further provided in the bottom surface of the recessed portion 113, and the desiccant may be disposed in the recessed portion. The desiccant may be located between the side surface of the battery 200 and the inner side surface of the recessed portion 113. When the battery module 500 includes the desiccant, deterioration due to a chemical change produced by moisture of a battery material of the battery 200 can be suppressed. As the desiccant, for example, silica gel or calcium chloride may be used.

The battery 200 may be a coin cell in which battery materials such as an electrolyte material, a positive electrode, a negative electrode, and a separator are disposed in a metal container and sealed. A coin cell may also be referred to as a button cell. The battery 200 may be a primary battery or a secondary battery. The battery 200 includes in its category not only a chemical battery but also a power supply element such as an electric double-layer capacitor.

Even when the battery 200 is a coin cell that cannot be surface-mounted alone on the mounting substrate, the battery package 100(100A, for example) enables the coin cell to be surface-mounted on the mounting substrate. For example, even when a battery material of the battery 200 is a sulfide-based battery material, the use of an already-sealed coin cell as the batter 200 allows it to be easily sealed even not in a special working environment such as under a dry atmosphere to form the surface-mount type battery 200. The battery (coin cell) 200 can be surface-mounted on the mounting substrate even not in a special working environment such as under a dry atmosphere, and the productivity of a circuit board device can be enhanced. The battery (coin cell) 200 can be hermetically sealed at a higher level than a general coin cell by the battery package 100(100A, for example), and the life of the battery (coin cell) 200 is improved. Since the battery material of the battery 200 is doubly sealed with the metal container and the battery package 100(100A, for example), leakage of the sulfide material from the battery (coin cell) 200 can be significantly reduced.

As illustrated in FIG. 11, the battery module 500 may include a thin-film type all-solid-state battery as the battery 200. The thin-film type all-solid-state battery is the battery 200 in which the negative electrode layer 220, the electrolyte layer 230, and the positive electrode layer 240 are layered on a metal plate 210, and the metal plate 210 has a function of a current collector. The metal plate 210 is, for example, a plate made of copper, aluminum, stainless steel, or the like, and the metal plate 210 has a plate thickness of, for example, 0.1 mm to 0.5 mm. The gold negative electrode layer 220, the electrolyte layer 230, and the positive electrode layer 240 are formed by, for example, a vapor deposition method, a sputtering method, or the like. The thin-film type all-solid-state battery 200 may include a resin cover 250 that covers the end face of the negative electrode layer 220, the end face of the electrolyte layer 230, and the end face of the positive electrode layer 240, and the resin cover 250 is made of an insulating resin.

In the case of the battery package 100(100A) of the example illustrated in FIG. 11, the metal plate 210 corresponds to the lower surface electrode 201, and the positive electrode layer 240 corresponds to the upper surface electrode 202. The negative electrode layer 220, the electrolyte layer 230, and the positive electrode layer 240 are sequentially layered from the metal plate 210 below, but the negative electrode layer 220 and the positive electrode layer 240 may be reversely layered. In this case, the negative electrode layer 220 corresponds to the upper surface electrode 202.

The position of the end face of the negative electrode layer 220, the position of the end face of the electrolyte layer 230, and the position of the end face of the positive electrode layer 240 may be displaced. For example, the negative electrode layer 220, the electrolyte layer 230, and the positive electrode layer 240 may be made smaller or larger in the layering order. The electrolyte layer 230 may be larger than the positive electrode layer 240 and the negative electrode layer 220. In this case, a short circuit between the positive electrode layer 240 and the negative electrode layer 220 in the side surface direction can be prevented.

Another metal plate 210 may be interposed between the positive electrode layer 240 and the conductive sheet 140 (conductive joining material 150). In this case, the conductive joining material 150 may be interposed between the another metal plate 210 and the positive electrode layer 240. In this case, the metal plate 210 on the positive electrode layer 240 (between the positive electrode layer 240 and the conductive sheet 140) corresponds to the upper surface electrode 202. The conductive joining material 150 may be interposed between the metal plate 210 corresponding to upper surface electrode 202 and the conductive sheet 140.

One ends of the plurality of positive electrode layers 240 may be connected to each other, and the other ends of the plurality of negative electrode layers 220 may be connected to each other. In this case, the plurality of positive electrode layers 240 and the plurality of negative electrode layers 200 have a comb-like shape in longitudinal sectional view. The plurality of positive electrode layers 240 and the plurality of negative electrode layers 220 are disposed such that the two comb teeth mesh with each other, and the electrolyte layer 230 is disposed between the positive electrode layers 240 and the negative electrode layers 220.

As shown in FIG. 12, the battery module 500 may include a plurality of thin-film type all-solid-state batteries as the batteries 200. A plurality of thin-film type all-solid-state batteries 200 may be mounted in series in the recessed portion 113 of the battery package 100. The conductive joining material 150 may be interposed between the plurality of thin-film type all-solid-state batteries 200. The end portion of the electrolyte layer 230 may cover the end portion of the negative electrode layer 220. A plurality of thin-film type all-solid-state batteries 200 are efficiently manufactured by forming a thin film battery on a large metal plate and dividing the thin film battery into pieces with a predetermined size. The plurality of thin-film type all-solid-state batteries 200 may be connected by contact without any joining material interposed therebetween. When the plurality of thin-film type all-solid-state batteries 200 are pressed by the conductive sheet 140, the convex portion 161 of the lid 160, or the spacer 170, the contact resistance between the plurality of thin-film type all-solid-state batteries 200 can be reduced.

In general, a thin-film all individual battery has high energy density, high safety, and an excellent recycle life, but it is difficult to form a thin-film all-solid-state battery in the recessed portion 113 of the battery package 100, and it is also difficult to handle an all-solid-state battery formed only of a thin film. Therefore, the productivity (production efficiency) of the battery module 500 including the thin-film all individual battery decreases.

In contrast, as described above, when the thin-film type all-solid-state battery 200 in which the battery module 500 includes the metal plate 210 is used as the battery 200, mass production of the battery 200 becomes possible and productivity of the battery module 500 is improved. Specifically, after the negative electrode layer 220, the electrolyte layer 230, and the positive electrode layer 240 are formed on the metal plate 210, the battery 200 having a size that matches the recessed portion 113 of the insulating substrate 110 is cut out by dicing or the like and placed in the recessed portion 113 of the insulating substrate 110, so that the productivity of the battery module 500 is improved.

When the thin-film type all-solid-state battery 200 in which the battery module 500 includes the metal plate 210 is used as the battery 200, the adhesion between the metal plate 210 and the negative electrode layer 220, the adhesion between the negative electrode layer 220 and the electrolyte layer 230, and the adhesion between the positive electrode layer 240 and the electrolyte layer 230 are increased. Therefore, the power extraction efficiency of the battery 200 is increased.

In the battery module 500(500I) of the example illustrated in FIGs. 27 and 28, examples of a constituent material of the insulating member 300 disposed between the outer side surface of the battery 200 and the inner side surface of the recessed portion 113 include a resin material such as an epoxy resin or a silicone resin. The constituent material of the insulating member 300 may be a composite material of ceramic particles and a resin material. The insulating member 300 may be formed by solidifying a liquid resin injected into the gap between the battery 200 and the inner side surface of the recessed portion 113. The insulating member 300 that is solid may be inserted and disposed in the gap between the battery 200 and the inner side surface of the recessed portion 113. In the battery module 500(500I) of the example illustrated in FIG. 13, four insulating members 300 are arranged at intervals in the circumferential direction on each side portion of the gap having a quadrangular frame shape in plan view, but the arrangement is not limited to such an arrangement. When the recessed portion 113 and the battery 200 have a circular shape in plan view, three insulating members 300 are disposed at intervals in the circumferential direction, so that positional displacement of the battery 200 with respect to the insulating substrate 110 is suppressed. The insulating member 300 may be disposed over the entire outer periphery of the battery 200.

Each embodiment of the present disclosure has been described above. However, the present disclosure is not limited to the above embodiments.

### REFERENCE SIGNS

100(100A to 100J) Battery package
110 Insulating substrate
111 First surface
112 Second surface
113 Recessed portion
114 Second recessed portion
120 Frame portion
121 Insulating frame body
122 Frame-shaped metal film
123 Metal frame body
130 Wiring conductor
131 First electrode
132 Second electrode
133A First connection wiring
133B Second connection wiring
134A First external electrode
134B Second external electrode
135 Internal electrode
136 Seal pattern
140 Conductive sheet
141 Conductor sheet
142 Insulator sheet
150 Conductive joining material
160 Lid
161 Convex portion
162 Protruding portion
162f Pressing surface
170 Spacer
200 Battery (thin-film type all-solid-state battery, coin cell)
201 Lower surface electrode
202 Upper surface electrode
203 Solid electrolyte
210 Metal plate
220 Negative electrode layer
230 Electrolyte layer
240 Positive electrode layer
250 Resin cover
300 Insulating member
400 Electronic component (power supply IC)
410 Conductive connecting material
500(500A to 500J) Battery module

### FURTHER EMBODIMENTS

In the following, further embodiments of the present application are described.
1. A battery package comprising:
   an insulating substrate having a first surface, a second surface on a side opposite to the first surface, and a recessed portion which opens in the first surface and in which a battery is accommodated;
   a frame portion surrounding the recessed portion on the first surface;
   a wiring conductor comprising a first electrode located on a bottom surface of the recessed portion, a second electrode located on the first surface between the frame portion and the recessed portion, a first external electrode located on the second surface and electrically connected to the first electrode, and a second external electrode located on the second surface and electrically connected to the second electrode;
   a conductive sheet electrically connected to the second electrode and extending over an opening of the recessed portion above the first surface; and
   a lid closing the frame portion.
2. The battery package according to embodiment 1, wherein the conductive sheet and the second electrode are connected at a plurality of locations.
3. The battery package according to embodiment 1 or 2, wherein the conductive sheet is fixed to the first surface at positions sandwiching the recessed portion in plan view.
4. The battery package according to any one of embodiments 1 to 3, wherein
   the frame portion comprises an insulating frame body located on the first surface, and
   the conductive sheet is located on an inner side of the insulating frame body.
5. The battery package according to any one of embodiments 1 to 4, wherein the lid is made of metal and is welded to the frame portion.
6. The battery package according to any one of embodiments 1 to 5, further comprising a spacer located between the lid and the conductive sheet and being in contact with the lid and the conductive sheet.
7. The battery package according to any one of embodiments 1 to 5, wherein the lid comprises a protruding portion in contact with the conductive sheet.
8. The battery package according to embodiment 7, wherein the protruding portion presses the conductive sheet from above by vertical inversion.
9. The battery package according to any one of embodiments 1 to 8, further comprising a seal pattern located on the second surface, made of a solderable conductive material, and surrounding peripheries of the first external electrode and the second external electrode.
10. The battery package according to any one of embodiments 1 to 9, wherein the insulating substrate has a second recessed portion which opens in the second surface and in which an electronic component is accommodated.
11. A battery module comprising:
   the battery package according to any one of embodiments 1 to 9; and
   a battery accommodated in the recessed portion of the battery package and comprising a lower surface electrode electrically connected to the first electrode and an upper surface electrode electrically connected to the conductive sheet.
12. A battery module comprising:
   the battery package according to embodiment 10;
   a battery accommodated in the recessed portion of the battery package and comprising a lower surface electrode electrically connected to the first electrode and an upper surface electrode electrically connected to the conductive sheet; and
   an electronic component accommodated in the second recessed portion.
13. The battery module according to embodiment 12, wherein the electronic component is a power supply IC configured to control the battery.
14. The battery module according to any one of embodiments 11 to 13, wherein
   the lower surface electrode of the battery and the first electrode are joined with a conductive joining material, and
   the upper surface electrode of the battery and the conductive sheet are joined with a conductive joining material.
15. The battery module according to any one of embodiments 11 to 14, wherein a height of a first region located on an upper side of the battery of an entire region of the conductive sheet is higher than a height of a second region located on the first surface.
16. The battery module according to any one of embodiments 11 to 15, further comprising an insulating member located between a side surface of the battery and an inner side surface of the recessed portion.
17. The battery module according to any one of embodiments 11 to 16, wherein the battery is a thin-film type all-solid-state battery in which a negative electrode layer, an electrolyte layer, and a positive electrode layer are layered on a metal plate.
18. The battery module according to any one of embodiments 11 to 16, wherein the battery is a coin cell.

## Claims

1. A battery package (100) comprising:
an insulating substrate (110) having a first surface (111), a second surface (112) on a side opposite to the first surface (111), and a recessed portion (113) which opens in the first surface (111) and in which a battery (200) is accommodated;
a frame portion (120) surrounding the recessed portion (113) on the first surface (111);
a wiring conductor (130) comprising a first electrode (131) located on a bottom surface of the recessed portion (113), a second electrode (132) located on an inner side of the frame portion (120), a first external electrode (134A) located on the second surface (112) and electrically connected to the first electrode (131), and a second external electrode (134B) located on the second surface (112) and electrically connected to the second electrode (132);
a conductive sheet (140) electrically connected to the second electrode (132) and extending over the opening of the recessed portion (113); and
a lid (160) closing the frame portion (120),
wherein the conductive sheet (140) and the lid (160) are electrically insulated from each other, and
wherein the conductive sheet (140) is configured to press the battery (200) against the first electrode (131) by an elastic force of the conductive sheet (140).

2. The battery package (100) according to claim 1, wherein an upper surface of the battery (200) protrudes upward from the opening of the recessed portion (113) and a central portion of the conductive sheet (140) connected to the upper surface of the battery (200) is curved upward to have a protruding shape, or wherein the upper surface of the battery (200) is located below the opening of the recessed portion (113) and the central portion of the conductive sheet (140) connected to the upper surface of the battery (200) is curved downward to have a protruding shape.

3. The battery package (100) according to claim 1, wherein in the entire region of the conductive sheet (140), a first region (140B) located on the battery (200) is located at a position higher than a second region (140A) located on the insulating substrate (110), the reference position in height being a surface of the first electrode (131), and wherein optionally the conductive sheet (140) is curved downward at the outer edge of the first region (140B), and the second region (140A) is fixed to the insulating substrate (110) by way of the second electrode (132).

4. The battery package (100) according to claim 1, wherein the conductive sheet (140) and the second electrode (132) are connected at a plurality of locations.

5. The battery package (100) according to claim 1, wherein the conductive sheet (140) is fixed to the insulating substrate (110) at positions sandwiching the recessed portion (113) in plan view.

6. The battery package (100) according to claim 1, wherein the frame portion (120) comprises an insulating frame body (121) located on the first surface (111), and the conductive sheet (140) is located on an inner side of the insulating frame body (121).

7. The battery package (100) according to claim 1, wherein the lid (160) is made of metal and is welded to the frame portion (120).

8. The battery package (100) according to claim 1, further comprising a spacer (170) located between the lid (160) and the conductive sheet (140) and being in contact with the lid (160) and the conductive sheet (140),
wherein optionally the spacer (170) is insulative, or
wherein optionally the spacer (170) is made of an elastic body, and the spacer (170) is configured to press the conductive sheet (140) against the battery (200) by an elastic force of the spacer (170).

9. The battery package (100) according to claim 1, wherein the lid (160) comprises a protruding portion (162) in contact with the conductive sheet (140), wherein optionally the protruding portion (162) presses the conductive sheet (140) from above by vertical inversion.

10. The battery package (100) according to claim 1, further comprising a seal pattern (136) located on the second surface (112), made of a solderable conductive material, and surrounding peripheries of the first external electrode (134A) and the second external electrode (134B).

11. The battery package (100) according to claim 1, wherein the insulating substrate (110) has a second recessed portion (114) which opens in the second surface (112) and in which an electronic component (400) is accommodated.

12. A battery module (500) comprising:
the battery package (100) according to any one of claims 1 to 11; and
a battery (200) accommodated in the recessed portion (113) of the battery package (100) and comprising a lower surface electrode (201) electrically connected to the first electrode (131) and an upper surface electrode (202) electrically connected to the conductive sheet (140).

13. A battery module (500) comprising:
the battery package (100) according to claim 11;
a battery (200) accommodated in the recessed portion (113) of the battery package (100) and comprising a lower surface electrode (201) electrically connected to the first electrode (131) and an upper surface electrode (202) electrically connected to the conductive sheet (140); and
an electronic component (400) accommodated in the second recessed portion (114).

14. The battery module (500) according to claim 13, wherein the electronic component (400) is a power supply IC configured to control the battery (200).

15. The battery module (500) according to any one of claims 12 to 14,
wherein the lower surface electrode (201) of the battery (200) and the first electrode (131) are joined with a conductive joining material (150), and the upper surface electrode (202) of the battery (200) and the conductive sheet (140) are joined with a conductive joining material (150), or
further comprising an insulating member (300) located between a side surface of the battery (200) and an inner side surface of the recessed portion (113), or
wherein the battery (200) is a thin-film type all solid-state battery (200) in which a negative electrode layer (220), an electrolyte layer (230), and a positive electrode layer (240) are layered on a metal plate (210), or
wherein the battery (200) is a coin cell.
